# EUROPEAN PATENT SPECIFICATION

(11) **EP 4 187 359 B1**
(45) Date of publication and mention of the grant of the patent: **13.05.2026**
(21) Application number: 21854487.2
(22) Date of filing: 04.08.2021
(51) Int. Cl.: G06F 1/16, H04M 1/02

(54) **ELECTRONIC DEVICE FOR PROVIDING VARIOUS USER INTERFACES THROUGH PLURALITY OF DISPLAYS, AND METHOD THEREFOR**
ELEKTRONISCHE VORRICHTUNG ZUR BEREITSTELLUNG VERSCHIEDENER BENUTZERSCHNITTSTELLEN DURCH MEHRERE ANZEIGEN UND VERFAHREN DAFÜR
DISPOSITIF ÉLECTRONIQUE PERMETTANT DE FOURNIR DIVERSES INTERFACES UTILISATEUR PAR L'INTERMÉDIAIRE D'UNE PLURALITÉ D'AFFICHAGES, ET PROCÉDÉ ASSOCIÉ

(30) Priority: 04.08.2020 KR 20200097499
(43) Date of publication of application: 31.05.2023
(73) Proprietor: Samsung Electronics Co., Ltd., Suwon-si, Gyeonggi-do 16677 (KR)
(72) Inventor: CHUNG, Jinkyo, Suwon-si, Gyeonggi-do 16677 (KR); KWON, Yong, Suwon-si, Gyeonggi-do 16677 (KR); KIM, Joonhwan, Suwon-si, Gyeonggi-do 16677 (KR)
(74) Representative: HGF
(86) International application number: PCT/KR2021/010212
(87) International publication number: WO 2022/030990

(56) References cited:
- EP-A1- 2 977 850
- WO-A1-2020/062294
- KR-A- 20160 040 909
- KR-A- 20160 080 034
- KR-A- 20190 010 702
- KR-A- 20190 141 628
- US-A1- 2020 225 706

## Description

### Technical Field

Various embodiments of the disclosure relate to an electronic device which provides various user interfaces through a plurality of displays including a foldable display according to a using state of the electronic device, and a method thereof.

### Background Art

Recently, electronic devices including foldable displays are being developed. Since an electronic device including a foldable display can be carried in a folded state, it can provide enhanced portability. In addition, the electronic device including the foldable display can provide a screen of a large size in an unfolded state.

US 2020225706 A1 discusses an electronic device including a housing including first housing and second housing, and a hinge unit to rotate the first hosing and the second housing. EP 2977850 A1 discusses a mobile terminal including first and second body sections connected to each other via a hinge portion.

### Disclosure of Invention

### Technical Problem

A related-art electronic device including a foldable display may display a first image through a first display when the electronic device is unfolded, and may display a second image through a second display when the electronic device is folded.

Various embodiments of the disclosure provide an electronic device for providing user interfaces of various types or combinations through a plurality of displays (or different portions of a foldable display) in various using states, which include a folded state, an intermediate state, and an unfolded state, and a method thereof.

The technical objects to be achieved by the disclosure are not limited to that mentioned above, and other technical objects that are not mentioned above may be clearly understood to those skilled in the art based on the description provided below.

### Solution to Problem

The scope of protection of the present invention is defined by the appended independent claims. Optional features are specified by the dependent claims.

### Advantageous Effects of Invention

The electronic device according to various embodiments of the disclosure can provide enhanced user experience by providing user interfaces of various forms and combinations through a plurality of displays (or different portions of a foldable display) in various using states including a folded state, an intermediate state, and an unfolded state of the electronic device.

### Brief Description of Drawings

FIG. 1 is a block diagram of an electronic device in a network environment according to various embodiments;
FIG. 2 is a view illustrating a front view and a rear view of an electronic device in an unfolded state according to various embodiments;
FIG. 3 is a view illustrating a using state of an electronic device according to a change of a first state variable including a folding angle of the electronic device while the electronic device is changing from a folded state to an unfolded state according to various embodiments;
FIG. 4 is a view illustrating a using state of an electronic device according to a change of a first state variable including a folding angle of the electronic device and a change of a second state variable including a using direction (posture) of the electronic device according to various embodiments;
FIG. 5 is a block diagram illustrating an electronic device for providing various user interfaces according to a change in the using state use of the electronic device according to various embodiments;
FIG. 6 is a flowchart to explain a method for providing various user interfaces according to a change in the using state of an electronic device according to various embodiments;
FIG. 7 is a flowchart to explain a method for providing various user interfaces according to a change in the using state of an electronic device according to various embodiments;
FIGS. 8 and 9 are exemplary views to explain a method for providing various user interfaces according to a change in the using state of an electronic device according to various embodiments;
FIGS. 10 to 13 are exemplary views to explain a method for providing various user interfaces according to a using state of an electronic device according to various embodiments;
FIGS. 14 to 18 are exemplary views to explain various methods for selecting and/or changing a user interface according to a using state of an electronic device according to various embodiments; and
FIGS. 19 to 21 are exemplary views to explain a method for providing various user interfaces by using all of a plurality of displays according to a using state of an electronic device according to various embodiments.

### Mode for Carrying out the Invention

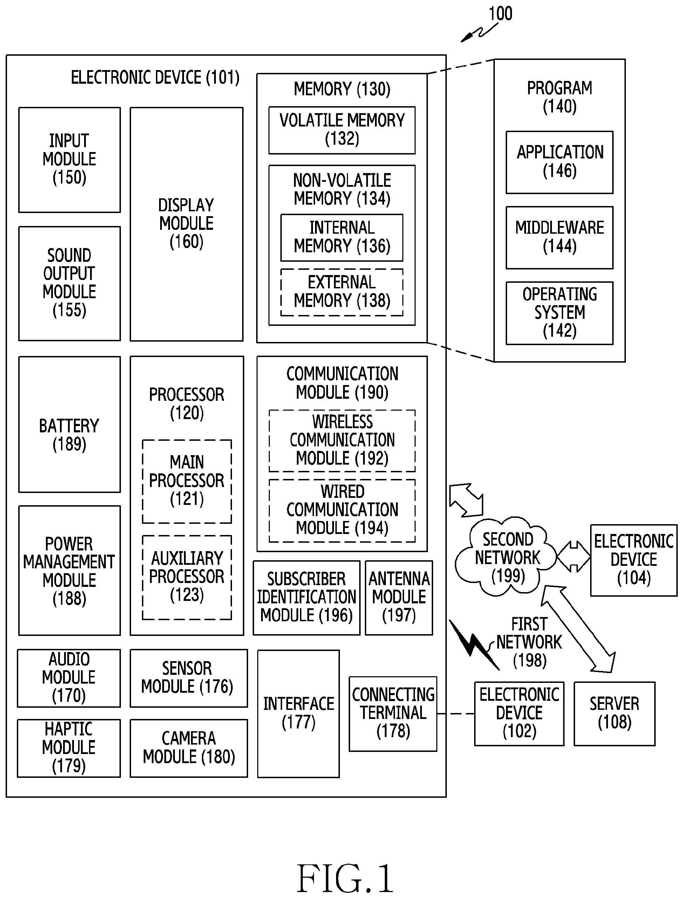

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

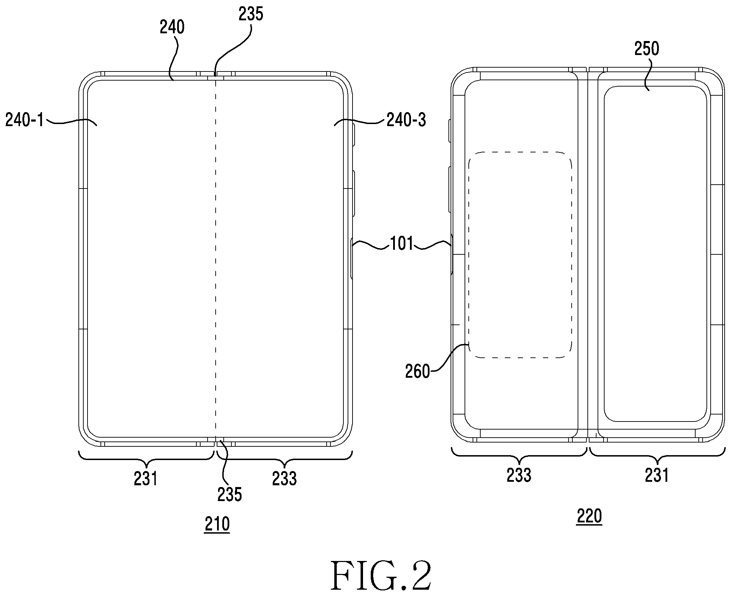

FIG. 2 is a view illustrating a front view and a rear view of an electronic device 101 in an unfolded state according to various embodiments.

Referring to FIG. 2, according to an embodiment, drawing 210 may illustrate the front view of the electronic device 101 in the unfolded state, and drawing 220 may illustrate the rear view of the electronic device 101 in the unfolded state. For example, drawing 210 may illustrate the front view of the electronic device 101 in a fully unfolded state, and drawing 220 may illustrate the rear view of the electronic device 101 in the fully unfolded state.

According to an embodiment, the electronic device 101 may include a first housing 231, a second housing 233, a hinge unit 235, a first display 240, and a second display 250.

According to an embodiment, the first housing 231 and the second housing 233 may be connected with each other. For example, one side surface of the first housing 231 and one side surface of the second housing 233 may be connected with each other. According to an embodiment, the first housing 231 and the second housing 233 may be connected by the hinge unit 235. According to an embodiment, the first housing 231 and the second housing 233 may be pivotably or rotatably connected about (or with reference to) the hinge unit 235.

According to an embodiment, the first display 240 may be exposed to the outside through a first area of the first housing 231 and a second area of the second housing 233. For example, the first display 240 may be disposed on the first housing 231 and the second housing 233 across the hinge unit 235.

According to an embodiment, the first display 240 may be a foldable display. According to an embodiment, the first display 240 may be folded or unfolded by the first housing 231 and the second housing 233 being rotated about the hinge unit 235. In the following descriptions, examples of the first display 240 being folded or unfolded will be explained, but this should not be considered as limiting. For example, the first display 240 may be implemented in a bending form, and examples of the first display 520 being implemented in the bending form may be explained as being the same as or similar to examples of the first display 240 being folded or unfolded.

According to an embodiment, when the first housing 231 and the second housing 233 are folded to form a certain angle with reference to the hinge unit 235, a first portion of the first display 240 (hereinafter, referred to as a '1-1 display') and a second portion of the first display 240 (hereinafter, referred to as a '1-2 display') may also be folded to form the certain angle with reference to the hinge unit 235. For example, in drawing 210, the 1-1 display 240-1 may be a left portion of the first display 240 with reference to an axis of the hinge unit 235 (for example, a portion illustrated by the dashed line in drawing 210), and the 1-2 display 240-3 may be a right portion of the first display 240 with reference to the axis of the hinge unit 235. Hereinafter, an angle formed by the first housing 231 and the second housing 233 (or the 1-1 display 240-1 and the 1-2 display 240-3) with reference to the hinge unit 235 will be referred to as a "folding angle". The folding angle may be an angle that is formed between the first housing 231 and the second housing 233.

According to an embodiment, the second display 250 may be exposed to the outside through a third area of the first housing 231. For example, the second display 250 may be disposed on the third area of the first housing 231 which faces in the opposite direction of the facing direction of the first area of the first housing 231. The second display 250 may be disposed on a rear surface of one surface of the first housing 231 on which the 1-1 display 240-1 is disposed. According to an embodiment, the second display 250 may be a display that is not foldable.

According to an embodiment, the electronic device 101 may further include a third display 260. According to an embodiment, the third display 260 may be exposed to the outside through a fourth area of the second housing 233. For example, the third display 260 may be disposed on the fourth area of the second housing 233 which faces in the opposite direction of the facing direction of the second area of the second housing 233. The third display 260 may be disposed on a rear surface of one surface of the second housing 233 on which the 1-2 display 240-3 is disposed. According to an embodiment, the third display 260 may be a display that is not foldable.

According to an embodiment, when the electronic device 101 further includes the third display 260, the second display 250 and the third display 260 may be integrally implemented. When the second display 250 and the third display 260 are integrally implemented, the second display 250 and the third display 260 may be implemented to be rotatable (or foldable) about the hinge unit 235.

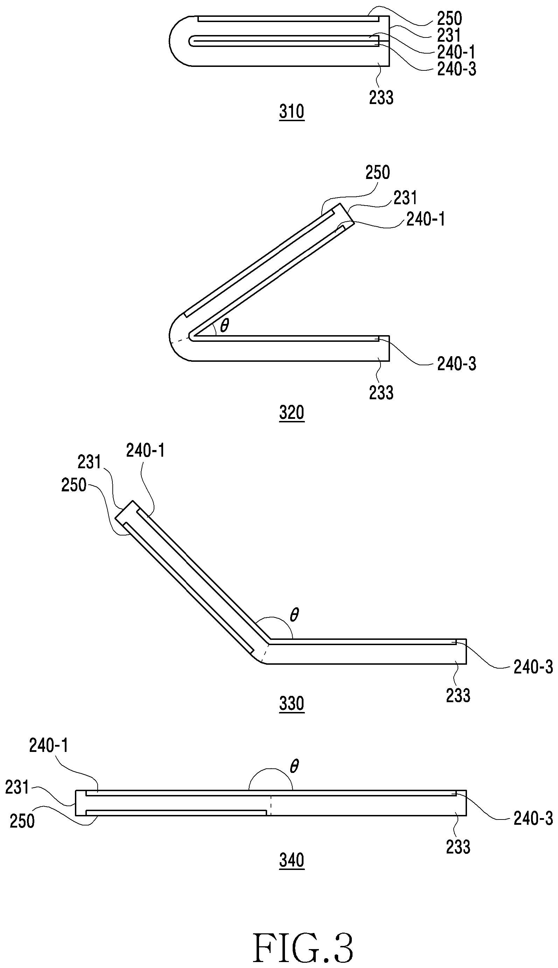

FIG. 3 is a view illustrating a change in the using state of the electronic device 101 which is changed according to a folding angle of the electronic device 101 while the electronic device 101 is changing from a folded state to an unfolded state according to various embodiments.

Referring to FIG. 3, according to an embodiment, drawing 310 may illustrate a fully folded state of the electronic device 101. For example, in drawing 310, the electronic device 101 may be in a state where the folding angle (θ) is about 0 degree (°). According to an embodiment, when the electronic device 101 is in the fully folded state, the first display 240 may be in an inactivation state (for example, a standby state or a power-saving state) without displaying a content. According to an embodiment, when the electronic device 101 is in the fully folded state, the second display 250 may display a designated content (for example, time) in the power-saving state, or may be in an inactivation state. According to an embodiment, when the electronic device 101 is in the fully folded state, the second display 250 may be changed from the inactivation state to an activation state according to a user input (for example, successively and quickly tapping twice).

According to an embodiment, drawing 320 illustrates that the electronic device 101 is switched from the fully folded state to a folded state where the folding angle is within a first range of less than a first angle (for example, an angle larger than or equal to 0 degree and less than about 70 degrees). For example, drawing 320 may indicate that the folding angle (θ) of the electronic device 101 is about 45 degrees. According to an embodiment, in the fully folded state of the electronic device 101, after the second display 250 is changed to the activation state through a user input, when the folding angle (θ) is changed to be within the first range of less than the first angle, the second display 250 may be maintained in the activation state as it is, and the first display 240 may be maintained in the inactivation state. According to an embodiment, when the electronic device 101 is fully folded and the folding angle (θ) is changed to be within the first range of less than the first angle in the inactivation state of the second display 250, the second display 250 may be switched to the activation state to be able to display a content.

According to an embodiment, drawing 330 illustrates that the electronic device 101 is switched to a folded state where the folding angle is within a second range of larger than or equal to the first angle (for example, about 70 degrees) and less than a second angle (for example, about 140 degrees). For example, drawing 330 may illustrate that the folding angle (θ) of the electronic device 101 is about 135 degrees. According to an embodiment, when the folding angle (θ) of the electronic device 101 is changed to be larger than or equal to the first angle and less than the second angle, the first display 240 may be switched from the inactivation angle to the activation state to be able to display a content. According to an embodiment, when the folding angle (θ) of the electronic device 101 is within the second range of larger than or equal to the first angle and less than the second angle, the second display 250 may be switched from the activation state to the inactivation state. However, this should not be considered as limiting. Even when the folding angle (θ) of the electronic device 101 is larger than or equal to the first angle, the second display 250 may maintain its activation state.

According to an embodiment, drawing 340 may illustrate that the electronic device 101 is switched from the folded state where the folding angle is within the second range of larger than or equal to the first angle and less than the second angle to a fully unfolded state. For example, in drawing 340, the electronic device 101 may be in a state where the folding angle (θ) is about 180 degrees.

Although FIG. 3 illustrates that the electronic device 101 is switched from the fully folded state to the fully unfolded state, the disclosure may be applied to an example in which the electronic device 101 is switched from the fully unfolded state to the fully folded state in the same or similar way.

Hereinafter, the operation of switching the electronic device 101 from the fully folded state to the fully unfolded state will be referred to as a 'unfolding operation', and the operation of switching the electronic device 101 from the fully unfolded state to the fully folded state will be referred to as a 'folding operation'.

According to an embodiment, FIGS. 2 and 3 illustrate an in-folding method of folding from the fully unfolded state to have the 1-1 display 240-1 and the 1-2 display 240-3 face each other, but this should not be considered as limiting. According to an embodiment, FIGS. 2 and 3 illustrate a method by which the electronic device 101 is folded with reference to one hinge unit 235, but this should not be considered as limiting. Hereinafter, the electronic device 101 which is folded in the in-folding method with reference to one hinge unit 235 according to various embodiments will be described by way of an example.

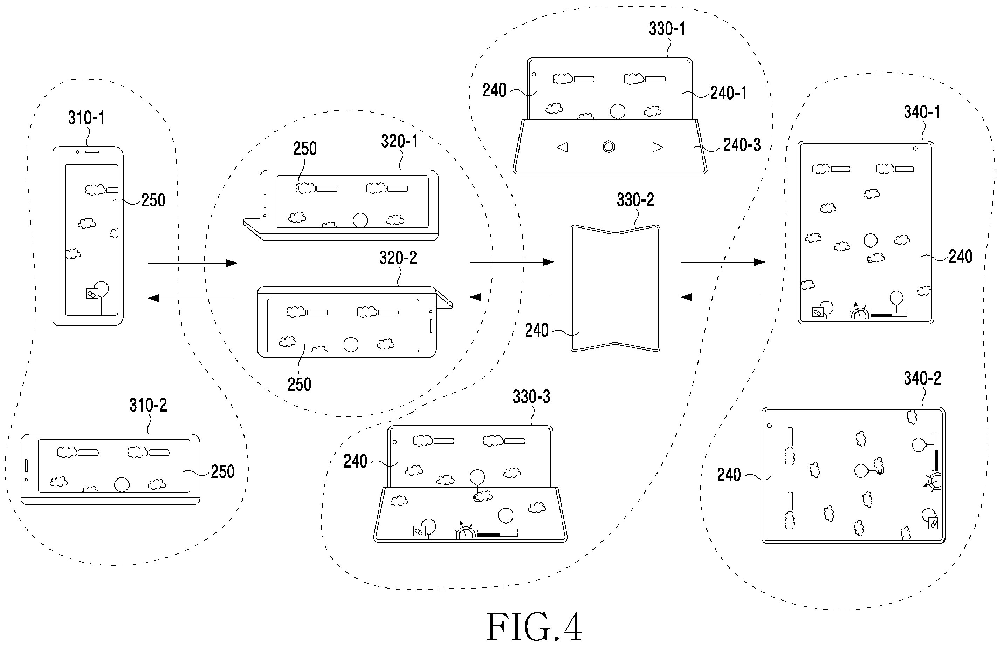

FIG. 4 is a view illustrating a change in the using state of the electronic device according to a change in a first state variable including a folding angle of the electronic device and a change in a second state variable including a using direction or a using form (posture) of the electronic device, while the electronic device 101 is changing from the folded state to the unfolded state. In the following descriptions, explanation of similar portions to those explained with reference to FIG. 3 will be omitted.

Referring to FIG. 4, according to an embodiment, drawings 310-1 and 310-2 may indicate a state where the electronic device 101 corresponding to drawing 310 of FIG. 3 is fully folded. For example, drawing 310-1 may indicate that the electronic device 101 is fully folded and the using direction of the electronic device 101 is a portrait mode. For example, drawing 310-2 may indicate that the electronic device 101 is fully folded and the using direction of the electronic device 101 is a landscape mode. In drawings 310-1 and 310-2, the folding angle (θ) of the electronic device 101 may be about 0 degree (°). According to an embodiment, when the electronic device 101 is fully folded (310-1 or 310-2), the first display 240 may be in an inactivation state (for example, a standby state or a power-saving state) without displaying a content, and may be changed to an activation state according to a user input (for example, successively and quickly tapping twice).

According to an embodiment, drawings 320-1 and 320-2 illustrate that the electronic device 101 is switched from the fully folded state to a folded state in which the folding angle is within the first range of less than the first angle (for example, an angle larger than or equal to 0 degree and less than about 70 degrees). According to an embodiment, in the fully folded state of the electronic device 101, after the second display 250 is changed to the activation state through a user input, when the folding angle (θ) is changed to be within the first range of less than the first angle, the second display 250 may be maintained in the activation state as it is, and the first display 240 may be maintained in the inactivation state. According to an embodiment, when the electronic device 101 is fully folded and the folding angle (θ) is changed to be within the first range of less than the first angle in the inactivation state of the second display 250, the second display 250 may be switched to the activation state to be able to display a content.

According to an embodiment, when the folding angle of the electronic device 101 is maintained within the first range of less than the first angle, the second display 250 may be maintained in the activation state as it is, and the first display 240 may be maintained in the inactivation state. According to an embodiment, as shown in drawing 320-1, the electronic device 101 may be switched to a first using state 320-1 of the first range in which the folding angle of the electronic device 101 is within the first range of less than the first angle, and the using direction indicates that the second housing 233 is positioned on a bottom surface and the first housing 231 floats in the air, and the second display 250 is exposed to face forward and upward. According to an embodiment, as shown in drawing 320-2, the electronic device 101 may be switched to a second using state 320-2 of the first range in which the folding angle of the electronic device 101 is within the first range of less than the first angle, and the using direction indicates that outer side surfaces of the second housing 233 and the first housing 231 are in contact with the bottom surface, respectively, and are positioned in a tent-like shape, and the second display 250 is exposed to face upward.

According to an embodiment, drawings 330-1, 330-2, 330-3 illustrate that the electronic device 101 is switched to a folded state in which the folding angle is within the second range of larger than or equal to the first angle (for example, about 70 degrees) and less than the second angle (for example, about 140 degrees). For example, drawings 330-1, 330-2, 330-3 may indicate that the folding angle (θ) of the electronic device 101 is about 135 degrees. According to an embodiment, when the folding angle (θ) of the electronic device 101 is changed to be larger than or equal to the first angle, the first display 240 may be switched from the inactivation state to an activation state to be able to display a content. According to an embodiment, when the folding angle (θ) of the electronic device 101 is within the second range larger than or equal to the first angle and less than the second angle, the second display 250 may be switched from the activation state to the inactivation state. However, this should not be considered as limiting, and even when the folding angle (θ) of the electronic device 101 is within the second range, the second display 250 may maintain its activation state.

According to an embodiment, when the folding angle of the electronic device 101 is within the second range, the using state of the electronic device 101 may indicate a first state (for example, drawings 330-1 and 330-3) and a second state (for example, drawing 330-2).

According to an embodiment, the first state 330-1 and 330-3 may be switched to a first using state 330-1 and a second using state 330-3 of the second range in which the folding angle of the electronic device 101 is within the second range of larger than or equal to the first angle and less than the second angle, and the using direction indicates that the second housing 233 is positioned on the bottom surface and the first housing 231 floats in the air, and the first portion 240-1 of the first display 240 is positioned on an upper surface to be exposed to face forward or upward, and the second portion 240-2 of the first display 240 is positioned on a bottom surface to be exposed to face upward.

According to an embodiment, in the first using state 330-1 of the second range in drawing 330-1, a user interface providing separate user interfaces distinguished for the first portion 240-1 and the second portion 240-2 of the first display 240 may be provided. For example, when one application is executed, an application execution screen may be provided on the first portion 240-1 of the first display 240, and various key buttons or function execution icons for controlling the application may be provided on the second portion 240-2.

According to an embodiment, in a second using state 330-3 of the second range in drawing 330-3, one integrated user interface may be provided for the entire area of the first portion 240-1 and the second portion 240-3 of the first display 240.

According to an embodiment, the second state 330-2 may correspond to a using state in which the folding angle of the electronic device 101 is within the second range of larger than or equal to the first angle and less than the second angle, and the using direction indicates that lower surfaces or upper surfaces of the second housing 233 and the first housing 231 in the same direction are positioned on a lower side and the first portion 240-1 of the first display 240 is positioned on the left and the second portion 240-2 of the first display 240 is positioned on the right like the shape of an opened book.

According to an embodiment, drawings 340-1, 340-2 may indicate that the electronic device 101 is switched from the state where the folding angle is within the second range of larger than or equal to the first angle and less than the second angle to a fully unfolded state. For example, in drawing 340-1, the electronic device 101 may have a folding angle (θ) of about 180 degrees and may be used in a portrait state. For example, in drawing 340-2, the electronic device 101 may have a folding angle (θ) of about 180 degrees and may be used in a landscape state.

FIG. 4 illustrates that the electronic device 101 is switched from the fully folded state to the fully unfolded state, but the disclosure may be applied to an example in which the electronic device 101 is switched from the fully unfolded state to the fully folded state in the same or similar way.

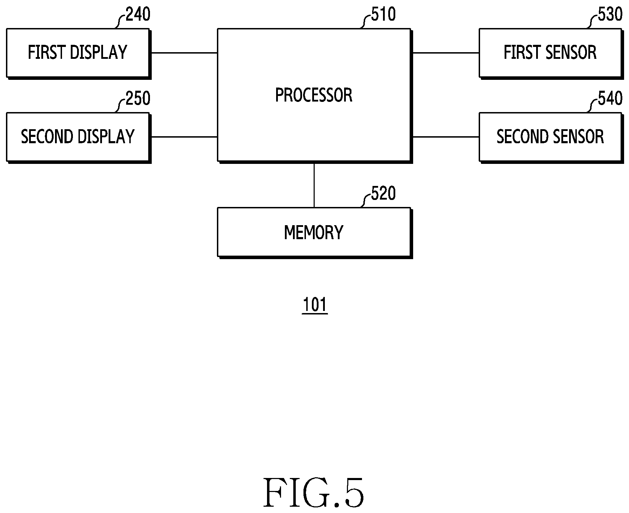

FIG. 5 is a block diagram illustrating an electronic device for providing various user interfaces according to a change in a using state of an electronic device according to various embodiments.

Referring to FIG. 5, the electronic device 101 may include a first display 240, a second display 250, a processor 510, a memory 520, a first sensor 530, and a second sensor 540.

According to an embodiment, the first display 240 and the second display 250 may be the same as or similar to the first display 240 and the second display 250 of FIG. 2 at least in part, and thus a redundant explanation thereof is omitted.

According to an embodiment, the first display 240 and the second display 250 may be implemented by touch screens which are coupled with touch panels, respectively.

According to an embodiment, the first display 240 and the second display 250 may be the same as or similar to the display module 160 of FIG. 1 at least in part.

According to an embodiment, the first sensor 530 may detect a folding angle.

According to an embodiment, the first sensor 530 may include a hall sensor. For example, the first housing 231 (or the second housing 233) may include a hall sensor, and the second housing 233 (or the first housing 231) may include a magnet (or a magnetic substance). While the folding operation or unfolding operation is performed, the first sensor 530 implemented as the hall sensor may detect a folding angle by sensing an electric characteristic (for example, voltage) generated (or changed) by the magnet.

However, the first sensor 530 for detecting the folding angle is not limited to the hall sensor. For example, the first sensor 530 may be implemented by a load cell, an infrared sensor, a pressure sensor, or an electromagnetic sensor.

According to an embodiment, the second sensor 540 may detect a using state (or posture) of the electronic device 101. For example, the second sensor 540 may detect an angle of the electronic device 101 to the face of the earth (or relative to the face of the earth). In another example, the second sensor 540 may detect a motion of the electronic device 101.

According to an embodiment, the second sensor 540 may include a sensor disposed in the first housing 231 to detect an angle of the first housing 231 to the face of the earth, and a sensor disposed in the second housing 233 to detect an angle of the second housing 233 to the face of the earth. However, this should not be considered as limiting, and the second sensor 540 may be disposed in any one of the first housing 231 or the second housing 233.

According to an embodiment, the second sensor 540 may include at least one of an acceleration sensor, a gyro sensor, or a geomagnetic sensor to detect a state of the electronic device 101.

According to an embodiment, the first sensor 530 and the second sensor 540 may be the same as or similar to the sensor module 176 of FIG. 1 at least in part.

According to an embodiment, the processor 510 may control overall operations for providing various user interfaces through the first display 240 and the second display 250, based on a designated operation mode, according to a folding angle and/or a using state of the electronic device 101.

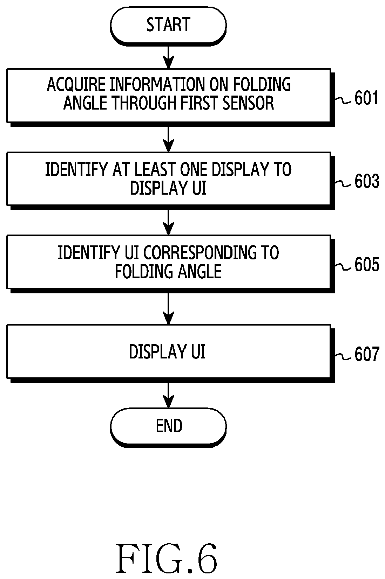

According to an embodiment, the processor 510 may control an operation of providing a user interface in response to a range of a folding angle during a folding operation or unfolding operation. The operation of the processor 510 providing the user interface in response to the folding angle will be described in detail below with reference to FIGS. 6, 8 to 11.

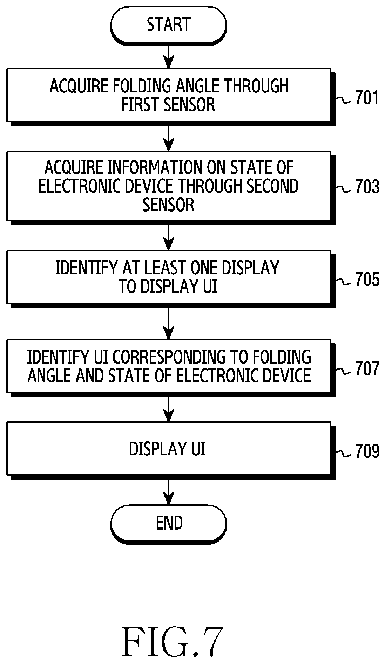

According to an embodiment, the processor 510 may control an operation of providing a user interface in response to a folding angle and a state of the electronic device 101 (for example, an angle of the electronic device 101 to the face of the earth) during a folding operation or unfolding operation. The operation of the processor 510 providing the user interface in response to the folding angle and the state of the electronic device 101 will be described in detail below with reference to FIGS. 7, 8, 9 and 12.

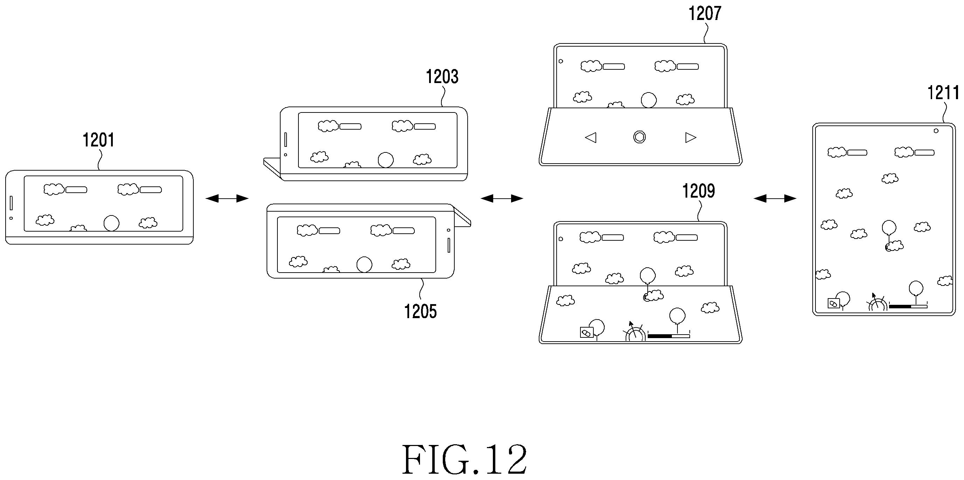

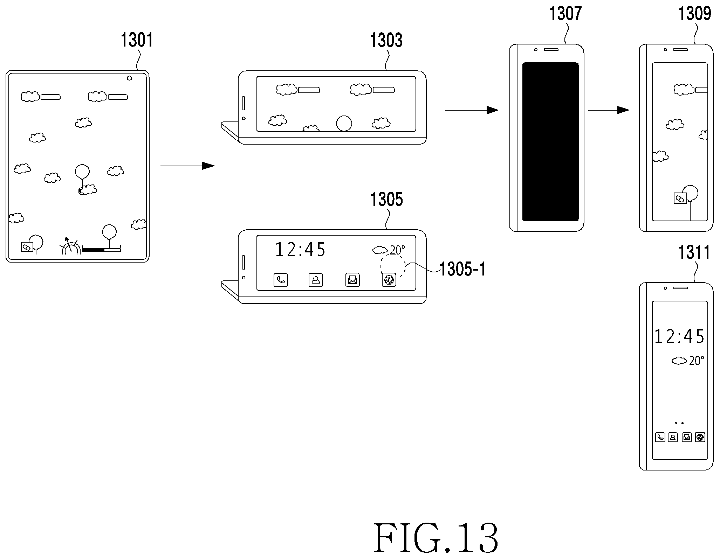

According to an embodiment, the processor 510 may provide a user interface in response to a folding angle and/or a state of the electronic device 101 during a folding operation or unfolding operation, and may provide a deformed user interface or a different user interface according to whether an application provides the corresponding user interface. Examples of the processor 150 providing the deformed user interface or different user interface according to whether the application provides the corresponding user interface will be described in detail below with reference to FIGS. 12 and 13.

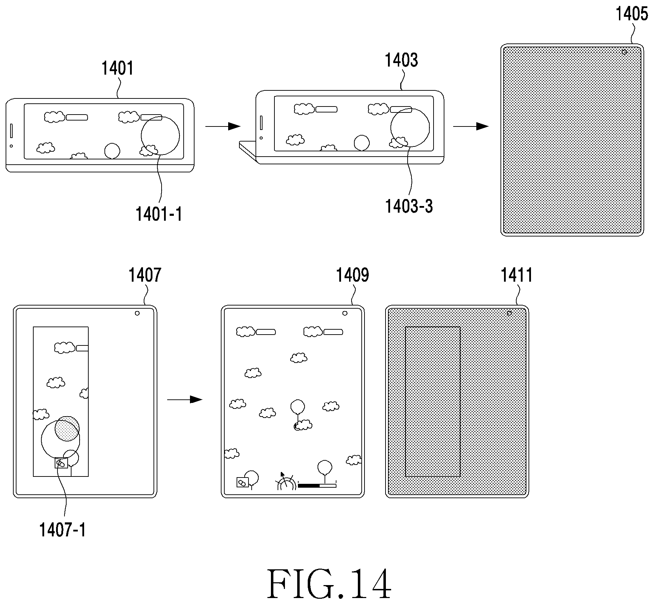

According to an embodiment, the processor 510 may control activation/inactivation of the first display 240 and/or the second display 250, and/or user interfaces provided therethrough, respectively, based on a user input, during a folding operation or unfolding operation. Operation related thereto will be described in detail below with reference to FIGS. 14 to 21.

According to an embodiment, the processor 510 may be the same as or similar to the processor 120 of FIG. 1 at least in part.

According to an embodiment, the memory 520 may store a variety of information to provide a user interface by using a foldable display.

According to an embodiment, the memory 520 may store various data necessary for providing a user interface according to operation modes of the first display 240 and the second display 250 which are designated in response to folding angles, respectively. For example, the memory 520 may store texts, images (or image frames), key buttons mapped onto functions, and/or a layout thereof to be displayed through at least one display according to an operation mode of the first display 240 or the second display 250 with respect to the first range, the second range, and the folded state or unfolded state, according to increase (or reduction) of the folding angle.

According to an embodiment, the memory 520 may store various data necessary for providing a plurality of user interfaces to the first display 240 and the second display 250 in response to folding angles and states of the electronic device 101 (for example, angles of the electronic device 101 to the face of the earth).

According to an embodiment, the electronic device 101 may further include a configuration that is not illustrated in FIG. 5. For example, the electronic device 101 may further include the first housing 231, the second housing 233, and the hinge unit 235 shown in FIG. 2 or 3. In another example, the electronic device 101 may further include the third display 260 of FIG. 2. In still another example, at least one of the components shown in FIG. 1 (for example, the communication module 160) may further be included.

FIG. 6 is a flowchart to explain a method for providing various user interfaces according to a change in the using state of the electronic device according to various embodiments.

Referring to FIG. 6, in operation 601, the processor 510 according to an embodiment may acquire information on a folding angle through the first sensor 530.

According to an embodiment, the processor 510 may acquire, from the first sensor 530, information on a folding angle that is formed by the first housing 231 and the second housing 233 with reference to the hinge unit 235.

According to an embodiment, the processor 510 may acquire information on a folding angle through the first sensor 530 during a folding operation or unfolding operation. According to an embodiment, the first sensor 530 may include a hall sensor, a load cell, an infrared sensor, a pressure sensor, or an electromagnetic sensor to detect a folding angle. The first sensor 530 may transmit the detected information on the folding angle to the processor 510.

In operation 603, the processor 510 according to an embodiment may identify at least one display to display a user interface, based on the folding angle. According to an embodiment, the processor 510 may identify at least one display to display a user interface identified as corresponding to a range of the folding angle, and an operation mode thereof, based on the folding angle. For example, the operation mode of the first display 240 may include a first operation mode in which the first display maintains an inactivation state (for example, a standby state or a power-saving state) without displaying a content, a second operation mode in which the first display 240 is in an activation state and displays images, texts, or functions keys as one integrated interface through an entire display area, and a third operation mode in which the first display operates the first portion 240-1 and the second portion 240-2 as separate areas and provide different interfaces. For example, in the third operation mode, different application screens may be provided on the first portion 240-1 and the second portion 240-2 of the first display 240, or even for the same application, a screen including images provided according to execution of the application may be displayed on the first portion 240-1, and a control screen including a control key including various function keys provided to execute the application may be displayed on the second portion 240-2. The operation mode of the first display 240 described above is merely an example and is not limited thereto, and may further be subdivided or other operation modes may be added. For example, the operation mode of the second display 250 may include a first operation mode in which the second display maintains an inactivation state (for example, a standby state or a power-saving state) without displaying a content, a second operation mode in which the second display displays only a designated content (for example, time) at a designated position by using low power in the inactivation state (for example, the standby state or the power-saving state), and a third operation mode in which the second display activates an entire display area and provides images, texts, and/or function keys. The operation mode of the second display 250 described above is merely an example and is not limited thereto, and may further be subdivided or other operation modes may be added.

In operation 605, the processor 510 according to an embodiment may identify a user interface to provide based on the folding angle.

According to an embodiment, the processor 510 may identify data corresponding to the folding angle, from among texts, images (or image frames), key buttons mapped onto functions and/or a layout thereof necessary for providing a plurality of user interfaces corresponding to ranges of a plurality of folding angles, which are stored in the memory 520 **In** the following descriptions, the plurality of user interfaces corresponding to the ranges of the plurality of folding angles, respectively, are referred to as 'designated user interfaces'.

According to an embodiment, the user interfaces corresponding to the ranges to which the plurality of folding angles belong may be set to be displayed on the first display 240 and/or the second display 250 according to the range of the folding angle. According to an embodiment, other user interfaces that are not designated according to the ranges of the plurality of folding angles may be provided to the first display 240 and/or the second display 250 according to user's selection.

According to an embodiment, the plurality of designated user interfaces may be generated by a designer of the electronic device 101 or a third party service provider. According to an embodiment, the plurality of designated user interfaces may be generated by a developer of an application provided by the electronic device 101, or a third party service provider.

In operation 607, the processor 510 according to an embodiment may provide a designated user interface to at least one display among the first display 240 and the second display 250 according to an operation mode.

According to an embodiment, referring to FIG. 3, when the electronic device 101 is fully folded as in drawing 310, for example, the folding angle (θ) is about 0 degree (°) in drawing 310, the first display 240 may be in an inactivation state (for example, a standby state or power-saving state) without displaying a content, and the processor 510 may control the first display according to the first operation mode without providing a user interface, and may control the second display 250 to provide a user interface to display a designated content (for example, time) according to the second operation mode or not to provide a user interface according to the first operation mode of the inactivation state. According to an embodiment, when the electronic device 101 is fully folded and the second display 250 is changed from the inactivation state or the second operation mode to the activation state according to a user input (for example, successively and quickly tapping twice), the processor may control the second display 250 to provide a designated user interface according to the third operation mode.

According to an embodiment, referring to drawing 320 of FIG. 3, when the electronic device 101 is folded to have the folding angle within the first range of less than the first angle (for example, an angle larger than or equal to 0 degree and less than about 70 degrees), the processor 510 may provide a designated user interface to the second display 250 according to the third operation mode, and the first display 240 may be in the inactivation state according to the first operation mode and may not provide a user interface.

According to an embodiment, referring to drawing 330 of FIG. 3, when the electronic device 101 is folded to have the folding angle within the second range of larger than or equal to the first angle (for example, about 70 degrees) and less than the second angle (for example, about 140 degrees), the processor 510 may switch the first display 240 to the activation state according to the second operation mode or the third operation mode, and may provide a designated user interface. According to an embodiment, when the folding angle of the electronic device 101 is within the second range, the processor 510 may switch the second display 250 from the activation state to the inactivation state, and may not provide a user interface according to the first operation mode. However, this should not be considered as limiting, and, when the folding angle of the electronic device 101 is within the second range, the second display 250 may be controlled to display only a specific content in the second operation mode, or may be maintained in the activation state of the third operation mode and may provide a designated user interface.

According to an embodiment, referring to drawing 340 of FIG. 3, when the folding angle of the electronic device 101 is in the fully unfolded state (for example, a state of about 180 degrees), the processor 510 may provide a designated user interface to the first display 240 according to the second operation mode. According to an embodiment, when the electronic device 101 is in the fully unfolded state, the processor 510 may switch the second display 250 from the activation state to the inactivation state and may not provide a user interface. However, this should not be considered as limiting, and, when the electronic device 101 is in the fully unfolded state, the second display 250 may be maintained in the activation state and may provide a designated user interface.

FIG. 7 is a flowchart to explain a method for providing various user interfaces according to a change in the using state of the electronic device according to various embodiments.

Referring to FIG. 7, in operation 701, the processor 510 according to an embodiment may acquire information on a folding angle through the first sensor 530. The operation of the processor 510 acquiring the information on the folding angle through the first sensor 530 is the same as or similar to operation 601 described with reference to FIG. 6 at least in part, and thus a detailed description thereof is omitted.

In operation 703, the processor 510 according to an embodiment may acquire information on a state (or a posture) of the electronic device 101 through the second sensor 540. For example, the processor 510 may acquire information on an angle of the electronic device 101 to the face of the earth from the second sensor 540. For example, the processor 510 may acquire information on an angle of the electronic device 101 to the face of the earth, which is detected through the second sensor 540 disposed in at least one of the first housing 231 or the second housing 233. According to an embodiment, the processor 510 may determine a using state (for example, a using direction or a posture) of the electronic device 101, which has been described with reference to FIG. 4, based on the information on the state (or posture) of the electronic device 101, through the second sensor 540.

In operation 705, the processor 510 according to an embodiment may identify at least one display to display a user interface, based on the information on the state of the electronic device including the folding angle. According to an embodiment, the processor 510 may identify at least one display to display a designated user interface and an operation mode thereof, based on the state of the electronic device including the folding angle. For example, the operation mode of the first display 240 may include a first operation mode in which the first display is maintained in an inactivation state (for example, a standby state or a power-saving state) without displaying a content, a second operation mode in which the first display 240 is maintained in an activation state and displays an image, a text, or a function key through an entire display area, and a third operation mode in which the first portion 240-1 and the second portion 240-2 of the first display 240 are operated as separate areas and provide different interfaces. For example, the operation mode of the first display 240 may subdivide the second operation mode to further include a 2-1 operation mode for providing a user interface in a horizontal direction, and a 2-2 operation mode for providing a user interface in a vertical direction. For example, the operation mode of the first display 240 may further include a 2-3 operation mode for providing a user interface in the vertical direction of the second operation mode, but adding an image for distinguishing between the first portion 240-1 and the second portion 240-2 of the display area or rearranging function keys. For example, the operation mode of the first display 240 may further include an operation mode in which a user interface is displayed upside down for each operation mode. The operation mode of the first display 240 described above is merely an example and is not limited thereto, and may further be subdivided or other operation modes may be added.

For example, the operation mode of the second display 250 may include a first operation mode in which the second display is maintained in an inactivation state (for example, a standby state or a power-saving state) without displaying a content, a second operation mode in which the second display displays only a designated content (for example, time) at a designated position with low power in the power-saving state, and a third operation mode in which the second display activates an entire display area and provides an image, a text, and/or function keys. For example, the operation mode of the second display 250 may subdivide the second operation mode to further include a 2-1 operation mode for displaying a designated content in the horizontal direction, and a 2-2 operation mode for displaying in the vertical direction. For example, the operation mode of the second display 250 may subdivide the third operation mode to further include a 3-1 operation mode for providing a user interface in the horizontal direction, and a 3-2 operation mode for providing a user interface in the vertical direction. For example, the operation mode of the second display 250 may further include an operation mode in which a user interface is displayed upside down for each operation mode. The operation mode of the second display 250 described above is merely an example and is not limited thereto, and may further be subdivided or other operation modes may be added.

In operation 707, the processor 510 according to an embodiment may identify a designated user interface to be provided to the at least one display identified based on the information on the state of the electronic device including the folding angle. For example, the processor 510 may identify a designated user interface corresponding to the state of the electronic device, which is determined according to the ranges of the plurality of folding angles and angle information of the electronic device to the face of the earth, which are stored in the memory 520, and various data necessary for providing the designated user interface.

In operation 709, the processor 510 according to an embodiment may provide the designated user interface according to an operation mode of the at least one display identified among the first display 240 and the second display 250.

According to an embodiment, the processor 510 may cause the designated user interface to be displayed according to the identified operation mode of the first display 240 and/or the second display 250, which is identified according to the ranges of the plurality of folding angles and the using direction or posture of the electronic device 101.

According to an embodiment, other displays and/or user interface that do not correspond to the folding angle of the electronic device 101 and the using direction or posture may be provided to the first display 240 and/or the second display 250 according to user's selection regardless of the identified operation mode. To achieve this, the processor 510 may control at least one of the first display 240 and/or the second display 250 to be activated/inactivated, or may change the operation mode of the user interface, in a pre-set method in response to a user input such as a touch input (for example, tap or double tap) on a key button provided through the first display 240 and/or the second display 250, or on the first display 240 and/or the second display 250.

According to an embodiment, a plurality of designated user interfaces may be generated by a designer of the electronic device 101 or a third party service provider. According to an embodiment, the plurality of designated user interfaces may be generated by a developer of an application provided by the electronic device 101 or a third party service provider.

According to an embodiment, referring to FIG. 4, when the electronic device 101 is fully folded as in drawing 310, for example, the folding angle (θ) is about 0 degree (°) as in drawing 310, the first display 240 may be in an inactivation state (for example, a standby state or a power-saving state) without displaying a content, and the processor 510 may control the first display according to the first operation mode without providing a user interface. For example, when the electronic device 101 is fully folded and the using direction or posture is the horizontal direction (for example, drawing 310-2 of FIG. 4), the processor 510 may control the second display 250 to provide a user interface to display a designated content (for example, time) in the horizontal direction according to the 2-1 operation mode, or may control the second display in the first operation mode of the inactivation state not to provide a user interface. For example, when the electronic device 101 is fully folded and the using direction or posture is the vertical direction (for example, drawing 310-1 of FIG. 4), the processor 510 may control the second display 250 to provide a user interface to display a designated content (for example, time) in the vertical direction according to the 2-2 operation mode.

According to an embodiment, referring to drawing 320-1 of FIG. 4, in the first using state 320-1 of the first range in which the electronic device 101 is folded to have the folding angle within the first range of less than the first angle (for example, an angle larger than or equal to 0 degree and less than about 70 degrees), and the using direction indicates that the second housing 233 is positioned on a bottom surface and the first housing 231 floats in the air, and the second display 250 is exposed to face forward and upward, the processor 510 may provide a designated user interface to the second display 250 according to the third operation mode or the 3-1 operation mode.

According to an embodiment, referring to drawing 320-2 of FIG. 4, in the second using state 320-3 of the first range in which the electronic device 101 is folded to have the folding angle within the first range of less than the first angle (for example, an angle larger than or equal to 0 degree and less than about 70 degrees), and the using direction indicates that outer side surfaces of the second housing 233 and the first housing 231 are in contact with the bottom surface, respectively, and are positioned in a tent-like shape, and the second display 250 is exposed to face upward, the operation mode of the second display 250 may be a 3-3 operation mode in which a user interface of the 3-1 operation mode is displayed upside down, and the processor 510 may provide the user interface in the 3-3 operation mode.

According to an embodiment, referring to drawing 330-1 of FIG. 4, in the first using state 330-1 of the second range in which the electronic device 101 is folded to have the folding angle within the second range of larger than the first angle (for example, about 70 degrees) and less than the second angle (for example, about 140 degrees), and the using state indicates that the second housing 233 is positioned on the bottom surface and the first housing 231 floats in the air, and the first portion 240-1 of the first display 240 is positioned on an upper surface to be exposed to face forward or upward, and the second portion 240-2 of the first display 240 is positioned on a bottom surface to be exposed to face upward, the processor 510 may maintain the first display 240 in the activation state according to the third operation mode, and may provide a designated user interface. According to an embodiment, when the folding angle of the electronic device 101 is within the second range and the using state is the first using state 330-1, the processor 510 may inactivate the second display 250, and may provide a user interface according to the third operation mode for providing separate user interfaces distinguished for the first portion 240-1 and the second portion 240-2 of the first display 240, respectively. For example, when one application is executed, an application execution screen may be provided on the first portion 240-1 of the first display 240, and various key buttons or function execution icons for controlling the application may be provided on the second portion 240-2.

According to an embodiment, drawing 330-2 of FIG. 4 indicates the second using state of the second range, and in this state, the processor 510 may provide one integrated user interface on the entire area of the first portion 240-1 and the second portion 240-3 of the first display 240 according to the second operation mode.

According to an embodiment, referring to drawing 330-3 of FIG. 4, when the electronic device 101 is folded to have the folding angle within the second range of larger than or equal to the first angle (for example, about 70 degrees) and less than the second angle (for example, about 140 degrees), and the using state is the first using state 330-3 which is the same as the first using state 330-1, the processor 510 may provide one integrated user interface on the entire area of the first portion 240-1 and the second portion 240-2 of the first display 240 according to the second operation mode.

According to an embodiment, referring to drawing 340-1 or 340-2 of FIG. 4, when the folding angle of the electronic device 101 is fully unfolded (for example, about 180 degrees) and the using state is the landscape mode or the portrait mode, the processor 510 may provide a designated user interface according to the 2-1 operation mode which is the landscape mode, or the 2-2 operation mode which is the portrait mode in the second operation mode for the first display 240. According to an embodiment, when the electronic device 101 is fully unfolded, the processor 510 may switch the second display 250 from the activation state to the inactivation state and may not provide a user interface. However, this should not be considered as limiting, and, when the electronic device 101 is fully unfolded, the processor may maintain the second display 250 in the activation state and may provide a designated user interface.

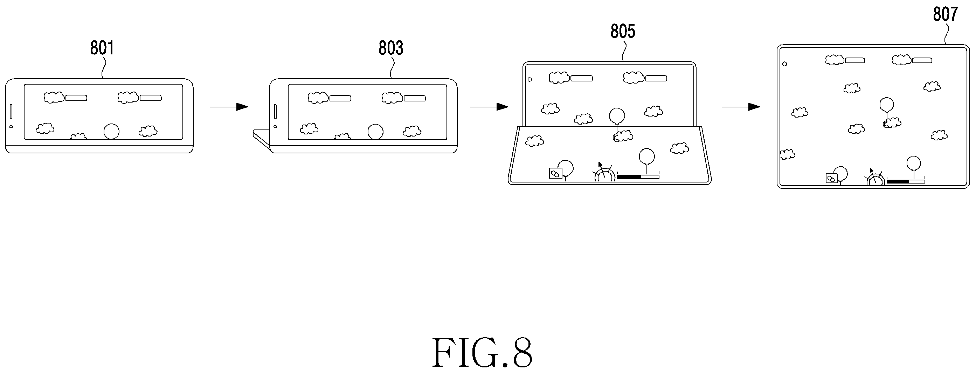

FIGS. 8 to 21 are exemplary views to explain a method for providing various user interfaces according to a using state of the electronic device according to various embodiments. Hereinafter, embodiments of FIGS. 8 to 21 will be described with reference to the electronic device of FIGS. 3 to 7 and the method thereof.

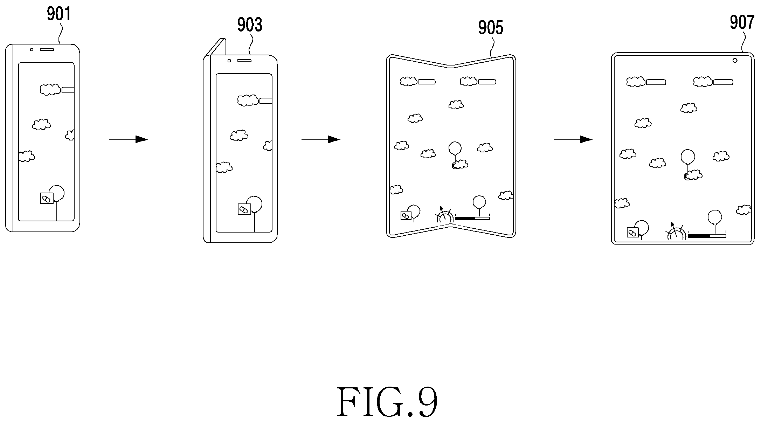

FIGS. 8 and 9 are exemplary views to explain a method for providing various interfaces according to a change in the using state of the electronic device according to various embodiments.

Referring to FIG. 8, a change in the using state of the electronic device 101 changed according to a folding angle of the electronic device 101 while the electronic device 101 is being changed from a folded state to an unfolded state is illustrated. For example, a using direction of the using state of the electronic device 101 may be maintained in a landscape mode.

According to an embodiment, when the electronic device 101 is fully folded, that is, the folding angle (θ) is about 0 degree (°) as in drawing 801, the first display 240 may be in the first operation mode of the inactivation state (for example, a standby state or a power saving state) without displaying a content. According to an embodiment, when the electronic device 101 is fully folded, the second display 250 may be controlled in the second operation mode such that the second display is in the inactivation state and displays only a designated content (for example, time) at a designated position in the horizontal direction with low power. According to an embodiment, when the electronic device 101 is fully folded, the second display 250 may be changed from the inactivation state to the activation state according to a user input (for example, successively and quickly tapping twice) and may be controlled according to the third operation mode.

According to an embodiment, referring to drawing 803, the electronic device 101 may be changed from the fully folded state to an activation state and may be switched to a folded state in which the folding angle is within the first range of less than the first angle (for example, an angle larger than or equal to 0 degree and less than about 70 degrees). For example, referring to drawing 803, after the second display 250 is changed to the activation state in the fully folded state of the electronic device 101, when the folding angle (θ) is changed to be within the first range of less than the first angle and is maintained for a designated time (for example, 200 ms) or longer, the second display 250 may be maintained in the third operation mode of the activation state as it is, and the first display 240 may be maintained in the the first operation mode of the inactivation state.

According to an embodiment, drawing 805 may illustrate that the electronic device 101 is switched into a folded state in which the folding angle is within the second range of larger than or equal to the first angle (for example, about 70 degrees) and less than the second angle (for example, about 140 degrees). According to an embodiment, when the folding angle (θ) of the electronic device 101 is changed to be larger than or equal to the first angle and less than the second angle, the first display 240 may be switched from the inactivation state to the second operation mode or third operation mode of the activation state to be able to display a content. According to an embodiment, when the folding angle (θ) of the electronic device 101 is within the second range of larger than or equal to the first angle and less than the second angle, the second display 250 may be switched from the activation state to the first operation mode or the second operation mode of the inactivation state.

According to an embodiment, in drawing 805, if a currently running application supports the third operation mode, the first display 240 may be automatically controlled according to the third operation mode, and may operate the first portion 240-1 and the second portion 240-2 as separate areas to provide different interfaces. For example, in the case of a game application, the first display 240 may be controlled according to the third operation mode to display a game execution screen on the first portion 240-1 and to display various function keys for controlling the game on the second portion 240-2.

According to an embodiment, drawing 807 may illustrate that the electronic device 101 is switched from the folded state in which the folding angle is within the second range of larger than or equal to the first angle and less than the second angle to a fully unfolded state. According to an embodiment, in drawing 807, one integrated user interface may be provided on the entire area of the first display 249 according to the second operation mode. According to an embodiment, when the electronic device 101 is in the fully unfolded state, the processor 510 may switch the second display 250 from the activation state to the inactivation state and may not provide a user interface.

Referring to FIG. 9, a change in the using state of the electronic device 101 changed according to a folding angle of the electronic device 101 while the electronic device 101 is being changed from a folded state to an unfolded state is illustrated. For example, a using direction of the using state of the electronic device 101 may be maintained in a portrait mode.

According to an embodiment, referring to drawing 901, when the electronic device 101 is fully folded, that is, the folding angle (θ) is about 0 degree (°), the first display 240 may be controlled according to the first operation mode of the inactivation state (for example, a standby state or power-saving state) without displaying a content, or the second operation mode to display only a designated content (for example, time) at a designated position in the vertical direction with low power in the inactivation state. According to an embodiment, when the electronic device 101 is fully folded, the second display 250 may be changed from the inactivation state to the activation state according to a user input (for example, successively and quickly tapping twice), and may be controlled according to the third operation mode to display a user interface.

According to an embodiment, referring to drawing 903, the electronic device 101 may be changed from the fully folded state to an activation state and may be switched to a folded state in which the folding angle is within the first range of less than the first angle (for example, an angle larger than or equal to 0 degree and less than about 70 degrees). For example, referring to drawing 903, after the second display 250 is changed to the activation state in the fully folded state of the electronic device 101, when the folding angle (θ) is changed to be within the first range of less than the first angle and is maintained for a designated time (for example, 200 ms) or longer, the second display 250 may be maintained the third operation mode of the activation state as it is, and the first display 240 may be maintained in the first operation mode of the inactivation state.

According to an embodiment, in drawing 905, when the electronic device 101 is switched to a folded state in which the folding angle is within the second range of larger than or equal to the first angle (for example, about 70 degrees) and less than the second angle (for example, about 140 degrees), the first display 240 may be switched from the inactivation state to the second operation mode of the activation state to be able to display a content. According to an embodiment, the second display 250 may be switched from the activation state to the first operation mode or the second operation mode of the inactivation state.

According to an embodiment, in drawing 905, the first display may provide a user interface in the second operation mode, for example, according to a currently running application or settings, and may provide a user interface that is changed by adding an image for distinguishing between the first portion 240-1 and the second portion 240-2 in the display area or re-arranging function keys according to the 2-3 operation mode.

According to an embodiment, in drawing 907, when the electronic device 101 is switched from the folded state in which the folding angle is within the second range of larger than or equal to the first angle and less than the second angle to a fully unfolded state, one integrated user interface may be provided on the entire area of the first display 240 according to the second operation mode. According to an embodiment, when the electronic device 101 is fully unfolded, the processor 510 may switch the second display 250 from the activation state to the inactivation state.

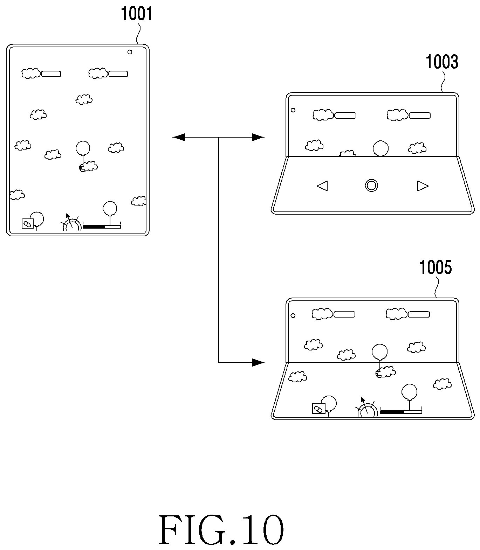

FIG. 10 is an exemplary view to explain a method for providing various interfaces according to various changes in the using state of the electronic device according to various embodiments.

According to an embodiment, when the electronic device is fully unfolded, that is, the folding angle (θ) is about 180 degrees (°) in drawing 1001, the processor 510 may execute a specific application, and accordingly, may provide an application execution screen as one integrated user interface on the entire area of the first display 240 according to the second operation mode.

According to an embodiment, the processor 510 may identify that the electronic device 101 is switched to a folded state in which the folding angle is within the second range of larger than or equal to the first angle (for example, about 70 degrees) and less than the second angle (for example, about 140 degrees). According to an embodiment, when the folding angle of the electronic device 101 is larger than or equal to the first angle and less than the second angle, the processor 510 may identify whether the application currently running and displayed on the first display 240 supports the third operation mode. For example, the executed specific application may include a game application, a camera application for capturing a still image or making a video, a gallery application for playing a still image or a video, a video application for playing a video, a call application for connecting a call including a video call, and a message application.

According to an embodiment, when the currently running application supports the third operation mode, the processor 510 may provide a user interface to the first display 240 according to the third operation mode for operating the first portion 240-1 and the second portion 240-2 of the first display 240 as separate areas and providing different user interfaces, as shown in drawing 1003. For example, when the running application is a game application, a game application execution screen may be provided on the first portion 240-1 of the first display 240-2, and various key buttons or function execution icons for controlling the game application may be provided on the second portion 240-3. For example, when the running application is a camera application, a viewfinder screen of the camera may be provided on the first portion 240-1 of the first display 240, and a control key such as a key for selecting various functions of the camera and a key for capturing an image may be provided on the second portion 240-2. For example, when the running application is a message application, a screen for displaying sent and received messages in chronological order may be provided on the first portion 240-1 of the first display 240, and a keyboard and a function selection key for entering a message text may be provided on the second portion 240-2.

According to an embodiment, when the currently running application does not support the third operation mode, the processor 510 may provide one integrated user interface by integrating the first portion 240-1 and the second portion 240-2 of the first display 240 as shown in drawing 1005.

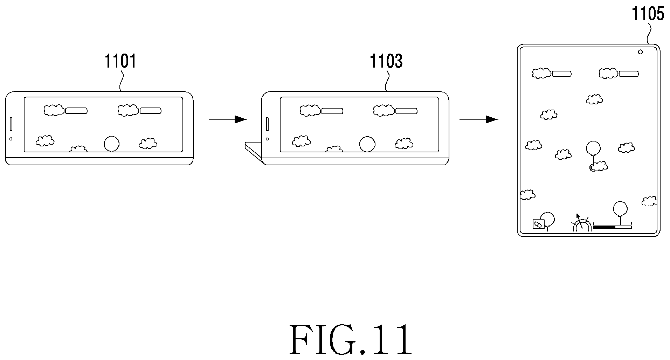

FIG. 11 is an exemplary view to explain a method for providing various interfaces according to various changes in the using state of the electronic device according to various embodiments.

Referring to FIG. 11, when the electronic device 101 is fully folded, that is, the folding angle is about 0 degree (°), the second display 250 may be activated and may provide a user interface according to the third operation mode as shown in drawing 1101. For example, in drawing 1101, a specific application may be executed and its execution screen may be displayed on the second display 250.

According to an embodiment, from the state in which the electronic device 101 is fully folded and the specific application is executed and its execution screen is displayed on the second display 250 as in drawing 1101, the electronic device 101 may be switched to a folded state in which the folding angle is within the first range of less than the first angle (for example, an angle larger than or equal to 0 degree and less than about 70 degrees) as in drawing 1103. According to an embodiment, when the folding angle of the electronic device 101 is switched from the fully folded state to the first range, the processor 510 may maintain the second display in the activation state as shown in drawing 1103, and may control to maintain the execution screen of the currently running application as it is and display the same.

According to an embodiment, from the state in which the folding angle of the electronic device 101 is within the first range of less than the first angle and the running application is displayed on the second display 250 as shown in drawing 1103, the electronic device may be switched to a state in which the folding angle of the electronic device 101 is fully unfolded as shown in drawing 1105.

According to an embodiment, when the folding angle of the electronic device 101 is fully unfolded as shown in drawing 1105, the first display 240 may be activated and may provide a user interface displaying the execution screen of the currently running application on the entire area according to the second operation mode. According to an embodiment, when the electronic device 101 is fully unfolded, the processor 510 may switch the second display 250 from the activation state to the inactivation state and may not provide a user interface.

According to an embodiment, when the electronic device 101 is fully folded, the second display 250 may be in the inactivation state and may not be activated, and, when the electronic device 101 is switched to the state in which the folding angle is fully unfolded, the first display 240 may be activated and may provide a user interface on the entire area according to the second operation mode.

FIG. 12 is an exemplary view to explain a method for providing various interfaces according to various changes in the using state of the electronic device according to various embodiments.

Referring to FIG. 12, when the electronic device 101 is fully folded, that is, the folding angle is about 0 degree (°), the second display 250 may be activated as shown in drawing 1201 and may provide a user interface according to the third operation mode. For example, in drawing 1201, a specific application may be executed and its execution screen may be displayed on the second display 250.

According to an embodiment, from the state in which the electronic device is fully folded and the specific application is executed and its execution screen is displayed on the second display 250 as shown in drawing 1201, the electronic device may be switched to a folded state in which the folding angle is within the first range of less than the first angle (for example, an angle larger than or equal to 0 degree and less than about 70 degrees) as shown in drawing 1203. According to an embodiment, when the folding angle of the electronic device 101 is switched from the fully folded state to the first range, the processor 510 may maintain the second display 250 in the activation state as shown in drawing 1103, and may control to maintain the execution screen of the currently running application as it is and to display the same.

According to an embodiment, the processor 510 may identify that the electronic device is switched from the state of drawing 1203 to a folded state in which the folding angle (θ) of the electronic device 101 is within the second range of larger than or equal to the first angle and less than the second angle (for example, an angle larger than or equal to 70 degrees and less than 140 degrees). According to an embodiment, when the folding angle of the electronic device 101 is changed to be larger than or equal to the first angle and less than the second angle, the processor 510 may identify whether the application currently running and displayed on the second display 250 supports the third operation mode of the first display 240.

According to an embodiment, when the currently running application supports the third operation mode of the first display 240, the processor 510 may activate the first display 240 as shown in drawing 1207, and may provide a user interface to the first display 140 according to the third operation mode for operating the first portion 240-1 and the second portion 240-2 of the first display 240 as separate areas and providing different user interfaces.

According to an embodiment, when the currently running application does not support the third operation mode, the processor 510 may activate the first display 240 and may display the currently running application on one execution screen over the entire area of the first portion 240-1 and the second portion 240-2 of the first display 240, as shown in drawing 1209.

According to an embodiment, the processor 510 may identify that the electronic device 101 is switched to a state in which the folding angle is fully unfolded as shown in drawing 1211.

According to an embodiment, when the folding angle of the electronic device 101 is fully unfolded as in drawing 1211, the processor 510 may provide a user interface displaying the execution screen of the currently running application on the entire area of the first display 240 according to the second operation mode.

FIG. 13 is an exemplary view to explain a method for providing various user interfaces according to a using state of the electronic device according to various embodiments.

Referring to FIG. 13, when the electronic device is fully unfolded as in drawing 1001, that is, the folding angle (θ) is about 180 degrees (°), the processor 510 may execute a specific application, and accordingly, may provide an application execution screen as one integrated user interface over the entire area of the first display 240 according to the second operation mode.

According to an embodiment, the processor 510 may identify that the electronic device 101 is switched to a folded state in which the folding angle is within the first range of less than the first angle (for example, about 70 degrees). According to an embodiment, when the folding angle of the electronic device 101 is less than the first angle, the processor 510 may identify whether the execution screen display of the application currently running and displayed on the first display 240 is resizable and can be displayed in the third operation mode of the second display 250.

According to an embodiment, when the execution screen display of the application displayed on the first display 240 is resizable and can be displayed in the third operation mode of the second display 250, the processor 510 may display the execution screen of the corresponding application on the second display 250 without interruption as shown in drawing 1303.

According to an embodiment, when the execution screen display of the application displayed on the first display 240 is not resizable and cannot be displayed on the second display 250, the processor 510 may activate the second display 250 and operate the same in the third operation mode, but may display a home screen rather than the execution screen of the corresponding application on the second display 250 as shown in drawing 1305. According to an embodiment, the processor 510 may provide a pop-up key 1305-1 for restarting the application running in the activation state of the first display 240 on the second display 250 on which the home screen is displayed. For example, the application restart key 1305-1 may be popped-up and displayed by selecting a previous task on the home screen.

According to an embodiment, when the execution screen display of the application displayed on the first display 240 is not resizable and cannot be displayed on the second display 250, the processor 510 may pop-up and display a notification for confirming whether to restart the application currently displayed on the first display 240 and to display on the second display 250. For example, the pop-up notification may provide the application restart key as described above.

According to an embodiment, in the state in which the executed application or home screen is displayed on the second display 250, the processor 510 may identify that the electronic device 101 is fully folded as shown in drawing 1307.

According to an embodiment, the processor 510 may inactivate the second display 250 when there is no input on the executed application or home screen for a designated time as shown in drawing 1307.

According to an embodiment, when the second display 250 is inactivated as shown in drawing 1307 and an activation event such as double tap occurs on the second display 250, the processor 510 may determine a screen of the second display 250 for a newly activated state, on the basis of a display state of the second display 250 before inactivation. For example, when the application is displayed on the second display 250 before inactivation, the corresponding application may be displayed as shown in drawing 1309. For example, when the home screen is displayed on the second display 250 before inactivation, the home screen may be displayed as shown in drawing 1311.

FIG. 14 is an exemplary view to explain various methods for selecting and/or changing a user interface according to a change in the using state of the electronic device according to various embodiments.

Referring to FIG. 14, when the electronic device is fully folded, that is, the folding angle (θ) is 0 degree (°), the second display 250 may be activated and a user interface may be provided according to the third operation mode as shown in drawing 1401. For example, in drawing 1401, a specific application may be executed and its execution screen may be displayed on the second display 250.

According to an embodiment, when the electronic device 101 is fully folded and the second display 250 is activated and the user interface is provided according to the third operation mode, a quick button 1401-1 for fixing the user interface screen of drawing 1401 may be provided. According to an embodiment, when the quick button 1401-1 for fixing the user interface screen of drawing 1401 is selected, the display screen of the second display 250 may be maintained as it is even if the folding angle of the electronic device 101 is changed.

According to an embodiment, from the state in which the electronic device 101 is fully folded and the specific application is executed and its execution screen is displayed on the second display 250 as shown in drawing 1401, the electronic device 101 may be switched to a folded state in which the folding angle is within the first range of less than the first angle (for example, an angle larger than or equal to 0 degree and less than 70 degrees) as in drawing 1403. According to an embodiment, when the folding angle of the electronic device 101 is switched from the fully folded state to the first range, the processor 510 may maintain the second display 250 in the activation state and may control to maintain the execution screen of the currently running application as it is and to display the same as shown in drawing 1403.

According to an embodiment, when the folding angle of the electronic device 101 is switched to the first range, the execution screen 1403 of the currently running application may be continuously provided on the second display 250 as shown in drawing 1403, and a quick button 1403-3 for fixing a user interface screen may be provided on the screen 1403. According to an embodiment, when the quick button 1403-3 for fixing the user interface screen of drawing 1403 is selected, the display screen of the second display 250 may be maintained as it is even if the folding angle of the electronic device 101 is changed.

According to an embodiment, after the quick button 1401-1 provided in the state of the screen 1401 of the second display 250, or the quick button 1403-3 provided in the state of the screen 1403 is selected, when the electronic device is switched to a fully unfolded state of the folding angle, the first display 240 may be maintained in the inactivation state as shown in drawing 1405.

According to an embodiment, after the quick button 1401-1 provided in the state of the screen 1401 of the second display 250, or the quick button 1403-3 provided in the state of the screen 1403 is selected, when the electronic device is switched to the fully unfolded state of the folding angle, the second display 240 may be maintained in the activation state and may display the executed application as shown in drawing 1407.

When the folding angle of the electronic device 101 is changed with the screen of the second display 250 being fixed by selection of the quick button 1401-1 or 1403-3, the second display 250 may provide a quick button 1407-1 for releasing the activation and execution application fixing state of the second display 250 while displaying the running application in the activation state, as shown in drawing 1407. According to an embodiment, when the quick button 1407-1 on the screen 1407 of the second display 250 is selected, the second display 250 may be inactivated as shown in drawing 1411, and the first display 240 may be activated and may display the running application on the entire screen as shown in drawing 1409.

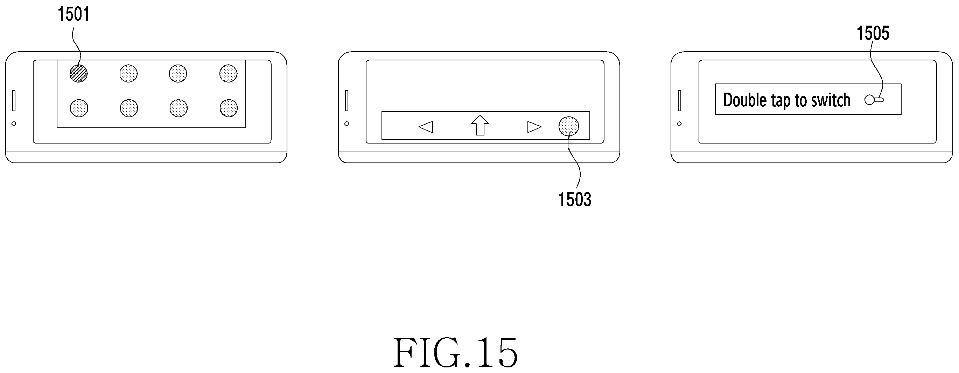

FIG. 15 is an exemplary view to explain various methods for selecting and/or changing a user interface according to a change in the using state of the electronic device according to various embodiments.

According to an embodiment, the processor 510 may provide a key button 1501 as a quick setup object (for example, a quick button) provided on a shortcut function menu screen (for example, a quick panel) which may be displayed, overlapping on at least a part of the screen as a separate layer by a user input (for example, swipe down on an upper end of the screen, or swipe down on the left or right of an upper end of the screen), or may provide a key button 1503 on a specific area (for example, one side of a navigation bar) on the screen, in order to set to maintain an activation state of a specific display regardless of whether a using state of the electronic device 101 such as a folding angle is changed. For example, when the key button 1501 or the key button 1503 is selected on the second display 250, the activation state of the second display 250 may be fixed and maintained.

According to an embodiment, a key button 1505 in a switch option form may be provided to switch between the inactivation state and the activation state of the first display 240 and the second display 250. For example, when the key button 1505 provided on the second display 250 is selected, the second display 250 may be inactivated and the first display 240 may be activated. For example, the key button 1505 provided on the second display 250 is selected, the second display 250 may be inactivated and the first display 240 may be activated, such that a screen displayed on the second display 250 may be switched and may be displayed on the first display 240. According to an embodiment, the key button 1505 may be selected by double tap, for example.

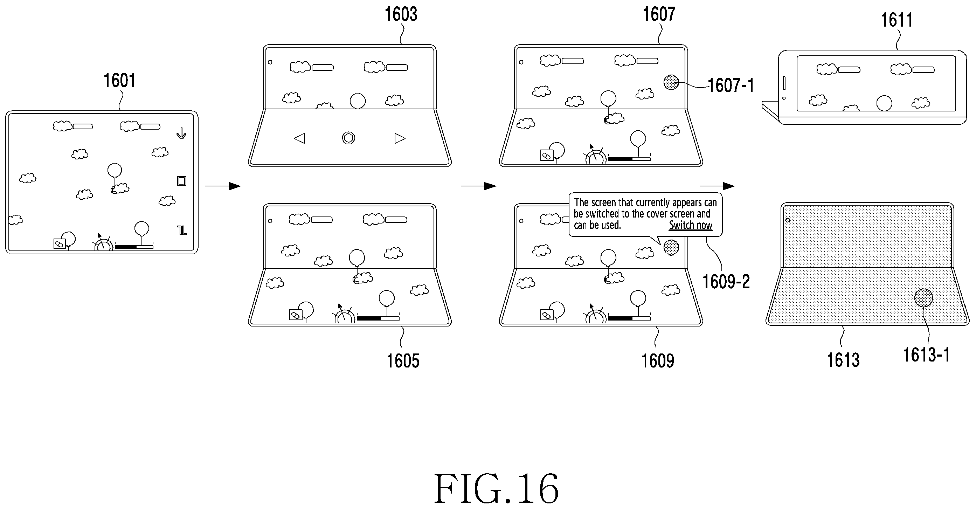

FIG. 16 is an exemplary view to explain various methods for selecting and/or changing a user interface according to a change in the using state of the electronic device according to various embodiments.

Referring to FIG. 16, according to an embodiment, when the electronic device is fully unfolded, that is, the folding angle (θ) is about 180 degrees (°), as in drawing 1601, the processor 510 may execute a specific application, and accordingly, may provide an application execution screen as one integrated user interface over the entire area of the first display 240 according to the second operation mode.

According to an embodiment, the processor 510 may identify that the electronic device 101 is switched to a folded state in which the folding angle is within the second range of larger than or equal to the first angle (for example, about 70 degrees) and less than the second angle (for example, about 140 degrees). According to an embodiment, when the folding angle of the electronic device 101 is larger than or equal to the first angle and less than the second angle, the processor 510 may identify whether the application currently running and displayed on the first display 240 supports the third operation mode.

According to an embodiment, when the currently running application supports the third operation mode, the processor 510 may provide a user interface to the first display 240 according to the third operation mode for operating the first portion 240-1 and the second portion 240-2 of the first display 240 as separate areas, and providing different user interfaces, as shown in drawing 1603.

According to an embodiment, when the currently running application does not support the third operation mode, the processor 510 may integrate the first portion 240-1 and the second portion 240-2 of the first display 240 and may provide one integrated user interface as shown in drawing 1605.

According to an embodiment, when the folding angle is within the second range of larger than or equal to the first angle and less than the second angle, the processor 510 may display a key button 1607-1 for switching the currently running application to the second display 250 on the screen 1607 of the first display 240 on which the currently running application is displayed.

According to an embodiment, when the key button 1607-1 for switching the currently running application to the second display 250 is selected, the processor 510 may activate the second display 250 and may display the currently running application on a screen 1611 of the second display 250.

According to an embodiment, when the key button 1607-1 for switching the currently running application to the second display 250 is selected, the processor 510 may additionally provide a key button to confirm whether to switch, along with a message 1609-2 informing that the current screen can be switched to the second display 250.

According to an embodiment, when the currently running application is switched to the screen 1611 of the second display 250, the first display 240 may be inactivated as shown in drawing 1613. According to an embodiment, the first display 240 may provide a key button 1613-1 for reactivating the first display 240 on the screen 1613 of the inactivation (for example, a standby mode) state. According to an embodiment, when the reactivation key button 1613-1 of the first display 240 is selected, the first display 240 may be reactivated and may display the screen 1607.

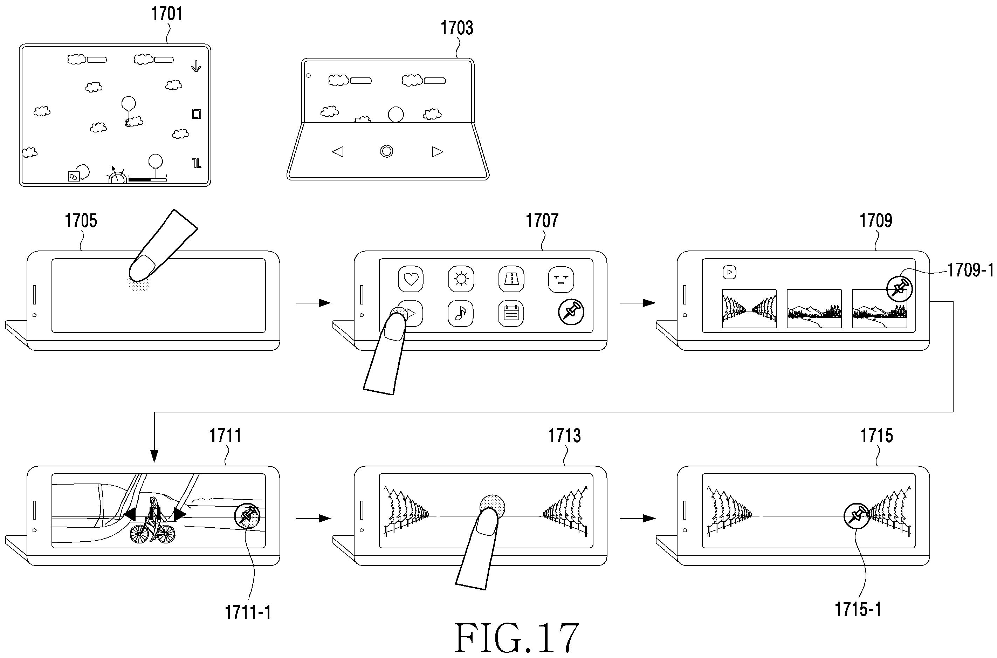

FIG. 17 is an exemplary view to explain various methods for selecting and/or changing a user interface according to a change in the using state of the electronic device according to various embodiments.

Referring to FIG. 17, according to an embodiment, when the electronic device is fully unfolded, that is, the folding angle (θ) is about 180 degrees (°), as in drawing 1701, the processor 510 may execute a specific application, and accordingly, may provide an application execution screen as one integrated user interface on the entire area of the first display 240 according to the second operation mode.

According to an embodiment, the processor 510 may identify that the electronic device 101 is switched to a folded state in which the folding angle is within the second range of larger than or equal to the first angle (for example, about 70 degrees) and less than the second angle (for example, about 140 degrees). According to an embodiment, when the folding angle of the electronic device 101 is larger than or equal to the first angle and less than the second angle, the processor 510 may identify whether the application currently running and displayed on the first display 240 supports the third operation mode, and, when the currently running application supports the third operation mode, the processor 510 may provide a user interface to the first display 240 according to the third operation mode for operating the first portion 240-1 and the second portion 240-2 of the first display 240 as separate areas and providing different user interfaces, as shown in drawing 1703.

According to an embodiment, when the currently running application does not support the third operation mode, the processor 510 may integrate the first portion 240-1 and the second portion 240-2 of the first display 240 and may provide one integrated user interface although this is not illustrated in the drawings.

According to an embodiment, when the folding angle is within the second range of larger than or equal to the first angle and less than the second angle, and the currently running application is displayed on the screen 1703 of the first display 240, the processor 510 may receive a user input including a touch input such as double tap through the second display 250 as shown in drawing 1705 of FIG. 17.

According to an embodiment, when a user input for switching the currently running application to the second display 250 is received, the processor 510 may activate the second display 250, and may identify whether the currently running application can be displayed on the screen of the second display 250.

According to an embodiment, when the currently running application cannot be switched to the second display 250 and cannot be displayed thereon, the processor 510 may activate the second display 250 and may display an application list that can be displayed on a screen 1707.

According to an embodiment, when one application is selected from the application list on the screen 1707, a corresponding application execution screen 1709 may be displayed on the second display 250, and a key button 1709 for fixing and displaying the application execution screen to the second display 250 may be displayed on a separate layer overlapping the application execution screen, for example.

According to an embodiment, as the second display 250 is activated, the first display 240 may be inactivated. According to an embodiment, when the application displayed on the first display 240 cannot be switched to the second display 250 and cannot be displayed thereon, the first display 240 may not be inactivated and may execute and display a separate application in the activation state independently from the second display 250.

According to an embodiment, when one content or function is selected on the execution screen 1709 of the running application and a corresponding screen 1711 is displayed, the processor 510 may display a key button 1711-1 for fixing and displaying the corresponding application execution screen to the second display 250, for example, on a separate layer overlapping the application execution screen.

According to an embodiment, when the key button 1709-1 or 1711-1 on the application execution screen 1709 or 1711 is selected and the screen fixing function is performed, the execution screen of the corresponding application may be fixed and displayed through the second display 250 as shown in drawing 1713. For example, the screen 1713 displayed according to selection of the screen fixing function may be displayed while maintaining the activation state, even when there is no user input for a designated time or longer.

According to an embodiment, when a user input including a touch input such as double tap occurs on the screen 1713 displayed according to the screen fixing function, the screen fixing function may be disabled, and for example, a key button 1715-1 for selecting the screen fixing function may be displayed on a screen 1715 again.

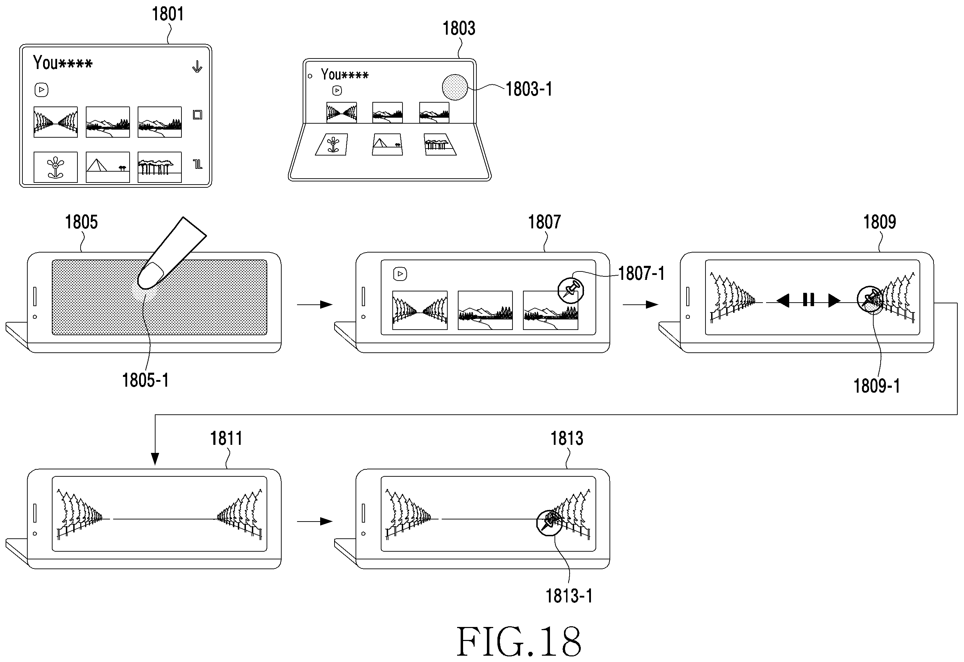

FIG. 18 is an exemplary view to explain various methods for selecting and/or changing a user interface according to a change in the using state of the electronic device according to various embodiments.

Referring to FIG. 18, according to an embodiment, when the electronic device is fully unfolded, that is, the folding angle (θ) is about 180 degrees (°), as in drawing 1801, the processor 510 may execute a specific application, and accordingly, may provide an application execution screen as one integrated user interface on the entire area of the first display 240 according to the second operation mode.

According to an embodiment, the processor 510 may identify that the electronic device 101 is switched to a folded state in which the folding angle is within the second range of larger than or equal to the first angle (for example, about 70 degrees) and less than the second angle (for example, about 140 degrees). According to an embodiment, when the folding angle of the electronic device 101 is larger than or equal to the first angle and less than the second angle, the processor 510 may identify whether the application currently running and displayed on the first display 240 supports the third operation mode. When the currently running application does not support the third operation mode, the processor 510 may provide a user interface on the first display 240 according to the second operation mode for integrating the first portion 240-1 and the second portion 240-2 of the first display 240 and operating as the entire area and providing one user interface as shown in drawing 1903.

According to an embodiment, when the folding angle is within the second range of larger than or equal to the first angle and less than the second angle and the currently running application is displayed on the screen 1803 of the first display 240, the processor 510 may receive a user input including a touch input such as double tap through the second display 250 as shown in drawing 1805.

According to an embodiment, when the user input for switching the currently running application to the second display 250 is received, the processor 510 may activate the second display 250 and may identify whether the currently running application can be displayed on the screen of the second display 250.

According to an embodiment, when the currently running application can be switched to the second display 250 and displayed thereon, the processor 510 may activate the second display 250 and may display an execution screen of the currently running application on a screen 1807.

According to an embodiment, the processor 510 may display a key button 1807-1 for fixing and displaying the application execution screen on the screen 1807 to the second display 250, for example, on a separate layer overlapping the application execution screen.

According to an embodiment, as the second display 250 is activated, the first display 240 may be inactivated. According to an embodiment, even when the application displayed on the first display 240 can be switched to the second display 250 and displayed thereon, the first display 240 may not be inactivated and may execute and display a separate application in the activation state independently from the second display 250.

According to an embodiment, when one content or function on the execution screen 1807 of the running application is selected and a corresponding screen 1809 is displayed, the processor 510 may display a key button 1809-1 for fixing and displaying the corresponding application execution screen 1809 to the second display 250, for example, on a separate layer overlapping the application execution screen.

According to an embodiment, when the key button 1807-1 or 1809-1 on the application execution screen 1807 or 1809 is selected and the screen fixing function is performed, the execution screen of the corresponding application may be fixed and displayed through the second display 250 as shown in drawing 1811. For example, the screen 1811 displayed according to selection of the screen fixing function may be displayed while maintaining the activation state even when there is no user input for a designated time or longer.

According to an embodiment, when a user input including a touch input such as double tap occurs on the screen 1811 displayed according to the screen fixing function, the screen fixing function may be disabled and a key button 1803-1 for selecting the screen fixing function may be displayed on a screen 1813 again.

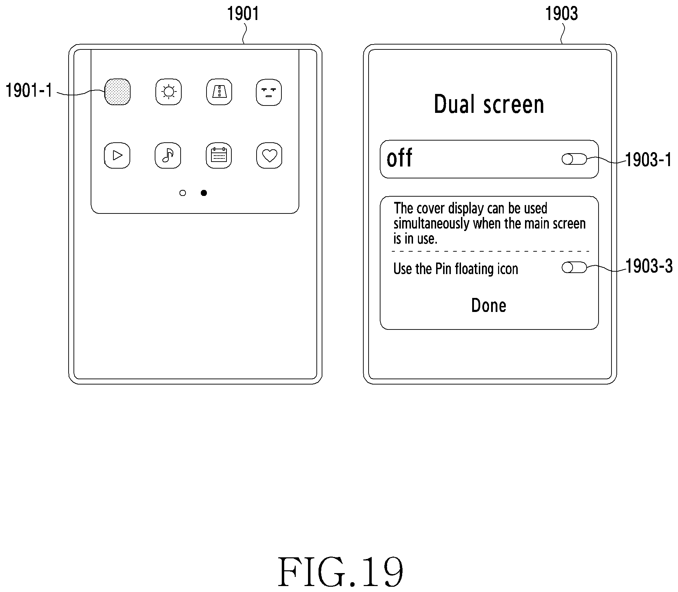

FIG. 19 is an exemplary view to explain a method for providing various interfaces by using all of a plurality of displays according to a change in the using state of the electronic device according to various embodiments.

Referring to FIG. 19, according to an embodiment, when a pre-designated screen or a certain screen is displayed on the first display 240, a dual screen setup key 1901-1 may be provided as a quick setup button (for example, a quick button) provided on a shortcut function menu screen (for example, a quick panel) provided by overlapping on a separate layer, according to a user input (for example, swipe down on an upper end of the screen or swipe down on the left or right on the upper end of the screen). When the dual screen setup key 1901-1 is selected, a dual screen mode may be activated such that the second display 250 can be activated and used simultaneously during the use of the display 240.

According to an embodiment, when the dual screen setup key 1901-1 provided on the shortcut function menu screen of the first display 240 is selected, a dual screen mode detail setup screen 1903 may be displayed. For example, the dual screen detail setup screen 1903 may provide a dual screen mode on/off setup key button 1903-1. For example, the dual screen detail setup screen 1903 may provide guidance on the dual screen mode. For example, the dual screen detail setup screen 1903 may provide a key button 1903-3 for selecting whether to display a key button (for example, the key buttons 1709-1, 1711-1, 1807-1, 1809-1 of FIG. 17 or 18) for fixing a screen when the dual screen mode of the first display 240 or the second display 250 is activated.

According to an embodiment, the screen 1901 and 1903 for activating the dual screen mode may be provided through the second display 250.

According to an embodiment, when the second display 250 is activated, the screen 1901 and 1903 for activating the dual screen mode may be provided only through the first display 240.

According to an embodiment, the screen 1901 and 1903 for activating the dual screen mode may be provided through all of the first display 240 and the second display 250.

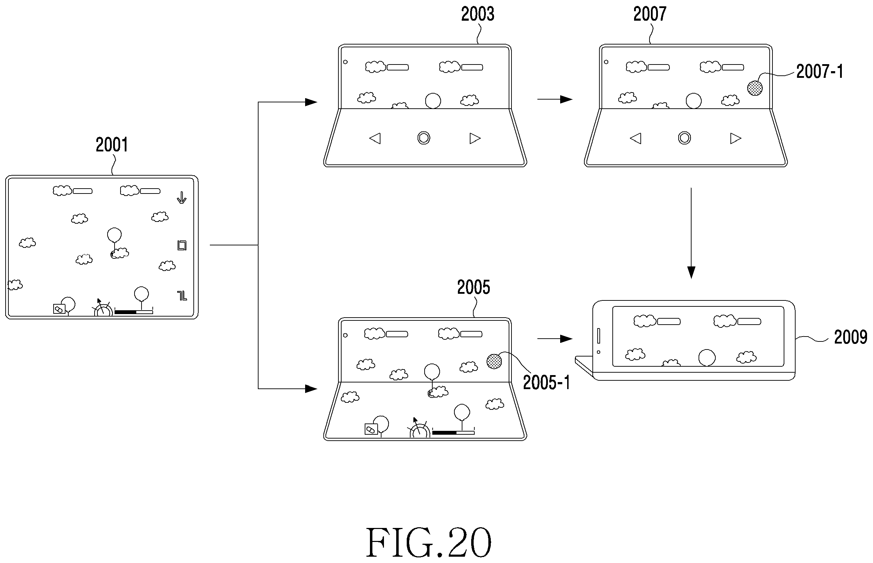

FIG. 20 is an exemplary view to explain a method for providing various user interfaces by using all of a plurality of displays according to a change in the using state of the electronic device according to various embodiments.

Referring to FIG. 20, according to an embodiment, when the electronic device is fully unfolded as in drawing 2001, the processor 510 may execute a specific application, and accordingly, may provide an application execution screen as one integrated user interface on the entire area of the first display 240 according to the second operation mode.

According to an embodiment, the processor 510 may identify that the electronic device 101 is switched to a folded state in which the folding angle is within the second range of larger than or equal to the first angle (for example, about 70 degrees) and less than the second angle (for example, about 140 degrees). According to an embodiment, when the folding angle of the electronic device 101 is larger than or equal to the first angle and less than the second angle, the processor 510 may identify whether the application currently running and displayed on the first display 240 supports the third operation mode.

According to an embodiment, when the currently running application supports the third operation mode, the processor 510 may provide a user interface on the first display 240 according to the third operation mode for operating the first portion 240-1 and the second portion 240-2 of the first display 240 as separate areas and providing different user interfaces.

According to an embodiment, when the currently running application does not support the third operation mode, the processor 510 may provide one integrated user interface by integrating the first portion 240-1 and the second portion 240-2 of the first display 240 as shown in drawing 2005.

According to an embodiment, the processor 510 may display a key button 2007-1 for executing a dual screen mode on a screen 2007 of the first display 240 on which the currently running application is displayed.

According to an embodiment, when the key button 2007-1 for executing the dual screen mode is selected, the processor 510 may activate the second display 250. According to an embodiment, when the dual screen mode is executed, the currently running application may be displayed on a screen 2009 of the second display 250. According to an embodiment, the first display 240 may also display the currently running application in the activation state. According to an embodiment, when the dual screen mode is executed, screens on which different applications are executed may be displayed on the first display 240 and the second display 250, respectively. For example, a screen 2003 on which a game application is executed may be displayed on the first display 240, and simultaneously, the screen 2009 on which the YouTube application is executed may be displayed on the second display 250. According to an embodiment, when the dual screen mode is executed, an application list may be provided on the screen 2009 of the second display 250, and a specific application may be selected from the application list and may be executed, and its execution screen may be displayed on the second display 250.

According to an embodiment, when the currently running application does not support the third operation mode, a key button 2005-1 for executing the dual screen mode may be provided on the application execution screen 2005 provided to the entire screen of the first display 240. According to an embodiment, a function performed when the key button 2005-1 for executing the dual screen mode is selected may be similar to the above-described function at least in part or in its entirety and thus a detailed description thereof is omitted.

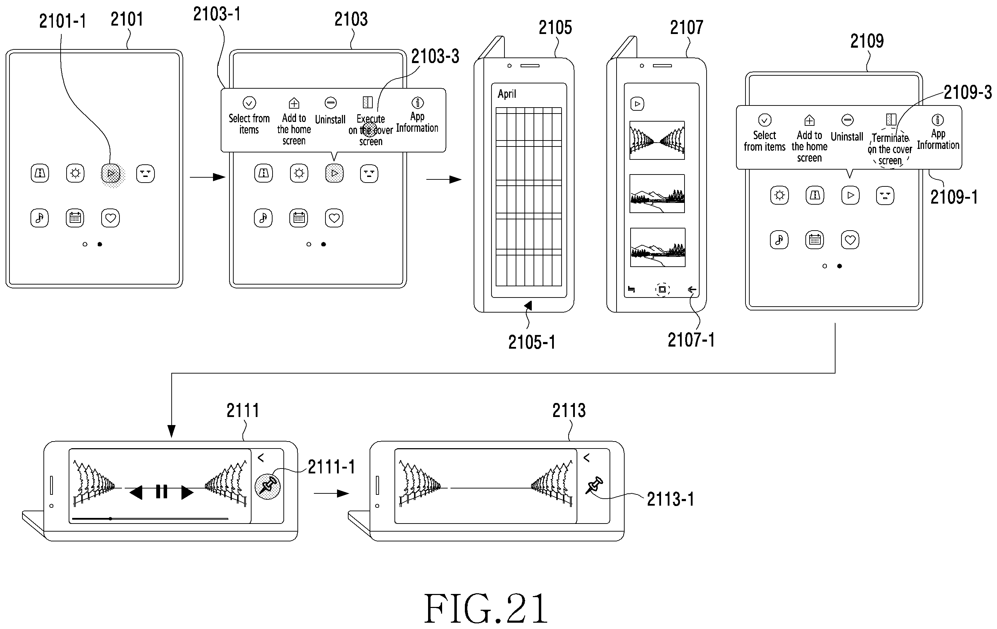

FIG. 21 is an exemplary view to explain a method for providing various user interfaces by using all of a plurality of displays according to a change in the using state of the electronic device according to various embodiments.

Referring to FIG. 21, according to an embodiment, in response to a touch input such as long press (for example, touching and holding for a reference time or longer) on one application (for example, application 2101-1) among applications provided on a home screen or an application list providing screen of the first display 240, a selection menu screen 2103-1 related to execution of the corresponding application may be popped-up and displayed. According to an embodiment, a dual screen setup key 2101-3 for displaying the corresponding application on the second display 250 may be provided as a quick execution button on the popped-up application-related setup menu screen 2103-1. When the dual screen setup key 2103-3 is selected, the dual screen mode may be activated and the application displayed on the first display 240 may be displayed on a screen 2105 or a screen 2107 of the second display 250 according to the type of the application. According to an embodiment, a go-back button 2105-1 or 2107-1 may be provided on the screen 2105 or screen 2107 displayed on the second display 250. According to an embodiment, when the go-back button 2105-1 or 2107-1 is selected on the screen 2105 or screen 2107 of the second display 250, the dual screen mode may be terminated and the second display 250 may be inactivated.

According to an embodiment, a dual screen mode termination key 2109-3 for disabling the dual screen mode and inactivating the second display 250 may be provided as a quick execution button on the application-related setup menu screen 2109-1 which is popped up on an application list screen 2109 displayed on the first display 240.

According to an embodiment, when one content or function is selected on the execution screen 2107 of the running application and a corresponding screen 2111 is displayed, the processor 510 may display a key button 2111-1 for fixing and displaying the corresponding application execution screen 2111 to the second display 250 on one side of the application execution screen, for example, on a right side.

According to an embodiment, when the key button 2111-1 is selected on the application execution screen 2111 and the screen fixing function is performed, the execution screen of the corresponding application may be fixed and displayed through the second display 250 as shown on a screen 2113. For example, the screen 2113 displayed according to selection of the screen fixing function may be displayed while maintaining the activation state even when there is no user input for a designated time or longer.

According to an embodiment, a key button 2113-1 for indicating that the corresponding screen is fixed and disabling the screen fixing function may be displayed on one side of the screen 2111 displayed according to the screen fixing function, for example, on a right side.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The disclosure has been described with reference to its preferred embodiments. Therefore, the disclosed embodiments should be considered from the explanatory perspective, not from the limited perspective.

## Claims

1. An electronic device (101) comprising:
a housing comprising a first housing (231) and a second housing (233);
a hinge unit (235) configured to enable the first housing and the second housing to rotate;
a first display (240), the first display comprising a first portion which is exposed to an outside through a first area of the first housing and a second portion which is exposed to the outside through a second area of the second housing;
a second display (250) exposed to the outside through a third area of the first housing facing in the opposite direction of a facing direction of the first area;
a first sensor (530) configured to detect a folding angle formed by the first housing and the second housing;
a second sensor (540) configured to detect a posture of the device;
a memory (130, 520) configured to store data for providing a user interface based on a plurality of folding angles; and
at least one processor (120, 510),
wherein the at least one processor is configured to:
acquire information on the folding angle through the first sensor;
when the folding angle is less than a first angle, provide a first user interface for an application on the second display if a mode of the second display is an activation mode;
**characterized in that** the at least one processor is further configured to:
when the folding angle is larger than or equal to the first angle and less than a second angle and the posture of the electronic device is determined to be one in which the first housing is positioned above the second housing, provide the first user interface on the first portion of the first display and a second user interface on the second portion of the first display, the second user interface comprising one or more buttons or icons for controlling the application, if a mode of the first display is an activation mode;
when the folding angle is larger than or equal to the first angle and less than a second angle and the posture of the electronic device is not determined to be one in which the first housing is positioned above the second housing, provide the first user interface on the first display, if a mode of the first display is an activation mode; and
when the folding angle is larger than or equal to the second angle, provide the first user interface on the first display, if a mode of the first display is an activation mode.

2. The electronic device (101) of claim 1, wherein, after the second display (250) is activated in a state where the first portion of the first display (240) and the second portion of the first display are identified as being folded, based on the folding angle, when the electronic device is switched to a folded state in which the folding angle is less than the first angle, the at least one processor (120, 510) is configured to maintain the display of the first user interface on the second display.

3. The electronic device (101) of claim 1, wherein, when the electronic device is switched to a folded state in which the folding angle is less than the first angle and a designated time or longer is elapsed, the at least one processor (120, 510) is configured to display the first user interface if a mode of the second display (250) is an activation mode.

4. The electronic device (101) of claim 1, wherein, when the electronic device is switched to a folded state in which the folding angle is less than the first angle and is switched to a state in which the folding angle is larger than or equal to the first angle before a designated time or longer is elapsed, the at least one processor (120, 510) is configured to switch the second display (250) to an inactivation mode.

5. The electronic device (101) of claim 4, wherein the inactivation mode of the second display (250) comprises a mode for displaying a designated content.

6. The electronic device (101) of claim 1, wherein the at least one processor (120, 510) is configured to provide a key button for changing or fixing an operation mode of a screen of the first display or an operation mode of a screen of the second display (250) on at least one of the screen of the first display (240) or the screen of the second display.

7. A method of an electronic device (101), wherein the electronic device comprises:
a housing comprising a first housing (231) and a second housing (233);
a hinge unit (235) configured to enable the first housing and the second housing to rotate;
a first display (240), the first display comprising a first portion which is exposed to an outside through a first area of the first housing and a second portion which is exposed to the outside through a second area of the second housing;
a second display (250) exposed to the outside through a third area of the first housing facing in the opposite direction of a facing direction of the first area;
a first sensor (530) configured to detect a folding angle formed by the first housing and the second housing; and
a second sensor (540) configured to detect a posture of the device,
wherein the method comprises:
acquiring information on the folding angle through the first sensor;
when the folding angle is less than a first angle, providing a first user interface for an application on the second display if a mode of the second display is an activation mode;
**characterized in that** the method further comprises:
when the folding angle is larger than or equal to the first angle and less than a second angle and the posture of the electronic device is determined to be one in which the first housing is positioned above the second housing, providing the first user interface on the first portion of the first display and a second user interface on the second portion of the first display, the second user interface comprising one or more buttons or icons for controlling the application, if a mode of the first display is an activation mode;
when the folding angle is larger than or equal to the first angle and less than a second angle and the posture of the electronic device is not determined to be one in which the first housing is positioned above the second housing, providing the first user interface on the first display, if a mode of the first display is an activation mode; and
when the folding angle is larger than or equal to the second angle, providing the first user interface, if a mode of the first display is an activation mode.

8. The method of claim 7, further comprising, after the second display (250) is activated in a state where the first portion of the first display (240) and the second portion of the first display are folded, based on the folding angle, when the electronic device is switched to a folded state in which the folding angle is less than the first angle, maintaining the display of the first user interface on the second display.

9. The method of claim 7, further comprising, when the electronic device (101) is switched to a folded state in which the folding angle is less than the first angle and a designated time or longer is elapsed, displaying the first user interface if a mode of the second display (250) is an activation mode.

10. The method of claim 7, further comprising, when the electronic device (101) is switched to a folded state in which the folding angle is less than the first angle and is switched to a state in which the folding angle is larger than or equal to the first angle before a designated time or longer is elapsed, switching the second display (250) to an inactivation mode.

11. The method of claim 10, wherein the inactivation mode of the second display (250) comprises a mode for displaying a designated content.

## Patentansprüche

1. Elektronische Vorrichtung (101), umfassend:
ein Gehäuse, umfassend ein erstes Gehäuse (231) und ein zweites Gehäuse (233);
eine Scharniereinheit (235), die dazu konfiguriert ist, dem ersten Gehäuse und dem zweiten Gehäuse zu ermöglichen, sich zu drehen;
eine erste Anzeige (240), wobei die erste Anzeige einen ersten Abschnitt, der durch einen ersten Bereich des ersten Gehäuses nach außen freiliegt, und einen zweiten Abschnitt, der durch einen zweiten Bereich des zweiten Gehäuses nach außen freiliegt, umfasst;
eine zweite Anzeige (250), die durch einen dritten Bereich des ersten Gehäuses, welcher der entgegengesetzten Richtung einer zugewandten Richtung des ersten Bereichs zugewandt ist, nach außen freiliegt;
einen ersten Sensor (530), der dazu konfiguriert ist, einen Faltwinkel zu detektieren, der durch das erste Gehäuse und das zweite Gehäuse gebildet wird;
einen zweiten Sensor (540), der dazu konfiguriert ist, eine Stellung der Vorrichtung zu detektieren;
einen Speicher (130, 520), der dazu konfiguriert ist, Daten zur Bereitstellung einer Benutzerschnittstelle basierend auf einer Vielzahl von Faltwinkeln zu speichern; und
zumindest einen Prozessor (120, 510),
wobei der zumindest eine Prozessor zu Folgendem konfiguriert ist:
Erfassen von Informationen über den Faltwinkel durch den ersten Sensor;
wenn der Faltwinkel weniger als ein erster Winkel ist, Bereitstellen einer ersten Benutzerschnittstelle für eine Anwendung auf der zweiten Anzeige, wenn ein Modus der zweiten Anzeige ein Aktivierungsmodus ist;
**dadurch gekennzeichnet, dass** der zumindest eine Prozessor ferner zu Folgendem konfiguriert ist:
wenn der Faltwinkel größer als oder gleich dem ersten Winkel und weniger als ein zweiter Winkel ist und die Stellung der elektronischen Vorrichtung als eine bestimmt ist, in der das erste Gehäuse über dem zweiten Gehäuse positioniert ist, Bereitstellen der ersten Benutzerschnittstelle auf dem ersten Abschnitt der ersten Anzeige und einer zweiten Benutzerschnittstelle auf dem zweiten Abschnitt der ersten Anzeige, wobei die zweite Benutzerschnittstelle eine oder mehrere Tasten oder Symbole zum Steuern der Anwendung umfasst, wenn ein Modus der ersten Anzeige ein Aktivierungsmodus ist;
wenn der Faltwinkel größer als oder gleich dem ersten Winkel und weniger als ein zweiter Winkel ist und die Stellung der elektronischen Vorrichtung nicht als eine bestimmt ist, in der das erste Gehäuse über dem zweiten Gehäuse positioniert ist, Bereitstellen der ersten Benutzerschnittstelle auf der ersten Anzeige, wenn ein Modus der ersten Anzeige ein Aktivierungsmodus ist; und
wenn der Faltwinkel größer als oder gleich dem zweiten Winkel ist, Bereitstellen der ersten Benutzerschnittstelle auf der ersten Anzeige, wenn ein Modus der ersten Anzeige ein Aktivierungsmodus ist.

2. Elektronische Vorrichtung (101) nach Anspruch 1, wobei, nachdem die zweite Anzeige (250) in einem Zustand aktiviert ist, in dem der erste Abschnitt der ersten Anzeige (240) und der zweite Abschnitt der ersten Anzeige basierend auf dem Faltwinkel als gefaltet identifiziert sind, wenn die elektronische Vorrichtung in einen gefalteten Zustand geschaltet ist, in dem der Faltwinkel weniger als der erste Winkel ist, der zumindest eine Prozessor (120, 510) dazu konfiguriert ist, die Anzeige der ersten Benutzerschnittstelle auf der zweiten Anzeige beizubehalten.

3. Elektronische Vorrichtung (101) nach Anspruch 1, wobei, wenn die elektronische Vorrichtung in einen gefalteten Zustand geschaltet ist, in dem der Faltwinkel weniger als der erste Winkel ist und eine benannte Zeit oder länger verstrichen ist, der zumindest eine Prozessor (120, 510) dazu konfiguriert ist, die erste Benutzerschnittstelle anzuzeigen, wenn ein Modus der zweiten Anzeige (250) ein Aktivierungsmodus ist.

4. Elektronische Vorrichtung (101) nach Anspruch 1, wobei, wenn die elektronische Vorrichtung in einen gefalteten Zustand geschaltet ist, in dem der Faltwinkel weniger als der erste Winkel ist, und in einen Zustand geschaltet ist, in dem der Faltwinkel größer als oder gleich dem ersten Winkel ist, bevor eine benannte Zeit oder länger verstrichen ist, der zumindest eine Prozessor (120, 510) dazu konfiguriert ist, die zweite Anzeige (250) in einen Inaktivierungsmodus zu schalten.

5. Elektronische Vorrichtung (101) nach Anspruch 4, wobei der Inaktivierungsmodus der zweiten Anzeige (250) einen Modus zum Anzeigen eines benannten Inhalts umfasst.

6. Elektronische Vorrichtung (101) nach Anspruch 1, wobei der zumindest eine Prozessor (120, 510) dazu konfiguriert ist, eine Schlüsseltaste zum Ändern oder Festlegen eines Betriebsmodus eines Bildschirms der ersten Anzeige oder eines Betriebsmodus eines Bildschirms der zweiten Anzeige (250) auf zumindest einem von dem Bildschirm der ersten Anzeige (240) oder dem Bildschirm der zweiten Anzeige bereitzustellen.

7. Verfahren einer elektronischen Vorrichtung (101), wobei die elektronische Vorrichtung Folgendes umfasst:
ein Gehäuse, umfassend ein erstes Gehäuse (231) und ein zweites Gehäuse (233);
eine Scharniereinheit (235), die dazu konfiguriert ist, dem ersten Gehäuse und dem zweiten Gehäuse zu ermöglichen, sich zu drehen;
eine erste Anzeige (240), wobei die erste Anzeige einen ersten Abschnitt, der durch einen ersten Bereich des ersten Gehäuses nach außen freiliegt, und einen zweiten Abschnitt, der durch einen zweiten Bereich des zweiten Gehäuses nach außen freiliegt, umfasst;
eine zweite Anzeige (250), die durch einen dritten Bereich des ersten Gehäuses, welcher der entgegengesetzten Richtung einer zugewandten Richtung des ersten Bereichs zugewandt ist, nach außen freiliegt;
einen ersten Sensor (530), der dazu konfiguriert ist, einen Faltwinkel zu detektieren, der durch das erste Gehäuse und das zweite Gehäuse gebildet wird; und
einen zweiten Sensor (540), der dazu konfiguriert ist, eine Stellung der Vorrichtung zu detektieren,
wobei das Verfahren Folgendes umfasst:
Erfassen von Informationen über den Faltwinkel durch den ersten Sensor;
wenn der Faltwinkel weniger als ein erster Winkel ist, Bereitstellen einer ersten Benutzerschnittstelle für eine Anwendung auf der zweiten Anzeige, wenn ein Modus der zweiten Anzeige ein Aktivierungsmodus ist;
**dadurch gekennzeichnet, dass** das Verfahren ferner Folgendes umfasst:
wenn der Faltwinkel größer als oder gleich dem ersten Winkel und weniger als ein zweiter Winkel ist und die Stellung der elektronischen Vorrichtung als eine bestimmt ist, in der das erste Gehäuse über dem zweiten Gehäuse positioniert ist, Bereitstellen der ersten Benutzerschnittstelle auf dem ersten Abschnitt der ersten Anzeige und einer zweiten Benutzerschnittstelle auf dem zweiten Abschnitt der ersten Anzeige, wobei die zweite Benutzerschnittstelle eine oder mehrere Tasten oder Symbole zum Steuern der Anwendung umfasst, wenn ein Modus der ersten Anzeige ein Aktivierungsmodus ist;
wenn der Faltwinkel größer als oder gleich dem ersten Winkel und weniger als ein zweiter Winkel ist und die Stellung der elektronischen Vorrichtung nicht als eine bestimmt ist, in der das erste Gehäuse über dem zweiten Gehäuse positioniert ist, Bereitstellen der ersten Benutzerschnittstelle auf der ersten Anzeige, wenn ein Modus der ersten Anzeige ein Aktivierungsmodus ist; und
wenn der Faltwinkel größer als oder gleich dem zweiten Winkel ist, Bereitstellen der ersten Benutzerschnittstelle, wenn ein Modus der ersten Anzeige ein Aktivierungsmodus ist.

8. Verfahren nach Anspruch 7, ferner umfassend, nachdem die zweite Anzeige (250) in einem Zustand aktiviert ist, in dem der erste Abschnitt der ersten Anzeige (240) und der zweite Abschnitt der ersten Anzeige basierend auf dem Faltwinkel gefaltet sind, wenn die elektronische Vorrichtung in einen gefalteten Zustand geschaltet ist, in dem der Faltwinkel weniger als der erste Winkel ist, Beibehalten der Anzeige der ersten Benutzerschnittstelle auf der zweiten Anzeige.

9. Verfahren nach Anspruch 7, ferner umfassend, wenn die elektronische Vorrichtung (101) in einen gefalteten Zustand geschaltet ist, in dem der Faltwinkel weniger als der erste Winkel ist und eine benannte Zeit oder länger verstrichen ist, Anzeigen der ersten Benutzerschnittstelle, wenn ein Modus der zweiten Anzeige (250) ein Aktivierungsmodus ist.

10. Verfahren nach Anspruch 7, ferner umfassend, wenn die elektronische Vorrichtung (101) in einen gefalteten Zustand geschaltet ist, in dem der Faltwinkel weniger als der erste Winkel ist, und in einen Zustand geschaltet ist, in dem der Faltwinkel größer als oder gleich dem ersten Winkel ist, bevor eine benannte Zeit oder länger verstrichen ist, Schalten der zweiten Anzeige (250) in einen Inaktivierungsmodus.

11. Verfahren nach Anspruch 10, wobei der Inaktivierungsmodus der zweiten Anzeige (250) einen Modus zum Anzeigen eines benannten Inhalts umfasst.

## Revendications

1. Dispositif électronique (101) comprenant :
un boîtier comprenant un premier boîtier (231) et un second boîtier (233) ;
une unité de charnière (235) conçue pour permettre au premier boîtier et au second boîtier de tourner ;
un premier affichage (240), le premier affichage comprenant une première partie qui est exposée à un extérieur au travers d'une première zone du premier boîtier et une seconde partie qui est exposée à l'extérieur au travers d'une deuxième zone du second boîtier ;
un second affichage (250) exposé à l'extérieur au travers d'une troisième zone du premier boîtier faisant face dans la direction opposée à une direction opposée de la première zone ;
un premier capteur (530) conçu pour détecter un angle de pliage formé par le premier boîtier et le second boîtier ;
un second capteur (540) conçu pour détecter une posture du dispositif ;
une mémoire (130, 520) conçue pour stocker des données en vue de fournir une interface utilisateur sur la base d'une pluralité d'angles de pliage ; et
au moins un processeur (120, 510),
dans lequel l'au moins un processeur est conçu pour :
acquérir des informations sur l'angle de pliage au travers du premier capteur ;
lorsque l'angle de pliage est inférieur à un premier angle, fournir une première interface utilisateur pour une application sur le second affichage si un mode du second affichage est un mode d'activation ;
**caractérisé en ce que** l'au moins un processeur est en outre conçu pour :
lorsque l'angle de pliage est supérieur ou égal au premier angle et inférieur à un second angle et que la posture du dispositif électronique est déterminée comme étant une posture où le premier boîtier est positionné au-dessus du second boîtier, fournir la première interface utilisateur sur la première partie du premier affichage et une seconde interface utilisateur sur la seconde partie du premier affichage, la seconde interface utilisateur comprenant un ou plusieurs boutons ou icônes en vue de commander l'application, si un mode du premier affichage est un mode d'activation ;
lorsque l'angle de pliage est supérieur ou égal au premier angle et inférieur à un second angle et que la posture du dispositif électronique n'est pas déterminée comme étant une posture où le premier boîtier est positionné au-dessus du second boîtier, fournir la première interface utilisateur sur le premier affichage, si un mode du premier affichage est un mode d'activation ; et
lorsque l'angle de pliage est supérieur ou égal au second angle, fournir la première interface utilisateur sur le premier affichage, si un mode du premier affichage est un mode d'activation.

2. Dispositif électronique (101) de la revendication 1, dans lequel, après l'activation du second affichage (250) dans un état où la première partie du premier affichage (240) et la seconde partie du premier affichage sont identifiées comme étant pliées, sur la base de l'angle de pliage, lorsque le dispositif électronique passe à un état plié où l'angle de pliage est inférieur au premier angle, l'au moins un processeur (120, 510) est conçu pour maintenir l'affichage de la première interface utilisateur sur le second affichage.

3. Dispositif électronique (101) de la revendication 1, dans lequel, lorsque le dispositif électronique passe dans un état plié où l'angle de pliage est inférieur au premier angle et qu'un temps désigné ou plus long est écoulé, l'au moins un processeur (120, 510) est conçu pour afficher la première interface utilisateur si un mode du second affichage (250) est un mode d'activation.

4. Dispositif électronique (101) de la revendication 1, dans lequel, lorsque le dispositif électronique passe à un état plié où l'angle de pliage est inférieur au premier angle et passe à un état où l'angle de pliage est supérieur ou égal au premier angle avant l'écoulement d'un temps désigné ou plus long, l'au moins un processeur (120, 510) est conçu pour faire passer le second affichage (250) dans un mode d'inactivation.

5. Dispositif électronique (101) de la revendication 4, dans lequel le mode d'inactivation du second affichage (250) comprend un mode en vue d'afficher un contenu désigné.

6. Dispositif électronique (101) de la revendication 1, dans lequel l'au moins un processeur (120, 510) est conçu pour fournir un bouton de touche en vue de modifier ou de fixer un mode de fonctionnement d'un écran du premier affichage ou un mode de fonctionnement d'un écran du second affichage (250) sur au moins l'un de l'écran du premier affichage (240) ou de l'écran du second affichage.

7. Procédé d'un dispositif électronique (101), dans lequel le dispositif électronique comprend :
un boîtier comprenant un premier boîtier (231) et un second boîtier (233) ;
une unité de charnière (235) conçue pour permettre au premier boîtier et au second boîtier de tourner ;
un premier affichage (240), le premier affichage comprenant une première partie qui est exposée à un extérieur au travers d'une première zone du premier boîtier et une seconde partie qui est exposée à l'extérieur au travers d'une deuxième zone du second boîtier ;
un second affichage (250) exposé à l'extérieur au travers d'une troisième zone du premier boîtier faisant face dans la direction opposée à une direction opposée de la première zone ;
un premier capteur (530) conçu pour détecter un angle de pliage formé par le premier boîtier et le second boîtier ; et
un second capteur (540) conçu pour détecter une posture du dispositif,
dans lequel le procédé comprend :
l'acquisition d'informations sur l'angle de pliage au travers du premier capteur ;
lorsque l'angle de pliage est inférieur à un premier angle, la fourniture d'une première interface utilisateur pour une application sur le second affichage si un mode du second affichage est un mode d'activation ;
**caractérisé en ce que** le procédé comprend en outre :
lorsque l'angle de pliage est supérieur ou égal au premier angle et inférieur à un second angle et que la posture du dispositif électronique est déterminée comme étant une posture où le premier boîtier est positionné au-dessus du second boîtier, la fourniture de la première interface utilisateur sur la première partie du premier affichage et d'une seconde interface utilisateur sur la seconde partie du premier affichage, la seconde interface utilisateur comprenant un ou plusieurs boutons ou icônes en vue de commander l'application, si un mode du premier affichage est un mode d'activation ;
lorsque l'angle de pliage est supérieur ou égal au premier angle et inférieur à un second angle et que la posture du dispositif électronique n'est pas déterminée comme étant une posture où le premier boîtier est positionné au-dessus du second boîtier, la fourniture de la première interface utilisateur sur le premier affichage, si un mode du premier affichage est un mode d'activation ; et
lorsque l'angle de pliage est supérieur ou égal au second angle, la fourniture de la première interface utilisateur, si un mode du premier affichage est un mode d'activation.

8. Procédé de la revendication 7, comprenant en outre, après l'activation du second affichage (250) dans un état où la première partie du premier affichage (240) et la seconde partie du premier affichage sont pliées, sur la base de l'angle de pliage, lorsque le dispositif électronique passe à un état plié où l'angle de pliage est inférieur au premier angle, le maintien de l'affichage de la première interface utilisateur sur le second affichage.

9. Procédé de la revendication 7, comprenant en outre, lorsque le dispositif électronique (101) passe dans un état plié où l'angle de pliage est inférieur au premier angle et qu'un temps désigné ou plus long est écoulé, l'affichage de la première interface utilisateur si un mode du second affichage (250) est un mode d'activation.

10. Procédé de la revendication 7, comprenant en outre, lorsque le dispositif électronique (101) passe à un état plié où l'angle de pliage est inférieur au premier angle et passe à un état où l'angle de pliage est supérieur ou égal au premier angle avant l'écoulement d'un temps désigné ou plus long, le passage du second affichage (250) dans un mode d'inactivation.

11. Procédé de la revendication 10, dans lequel le mode d'inactivation du second affichage (250) comprend un mode en vue d'afficher un contenu désigné.
